# EUROPÄISCHE PATENTSCHRIFT

(11) **EP 2 497 365 B1**
(45) Veröffentlichungstag und Bekanntmachung des Hinweises auf die Patenterteilung: **18.05.2016**
(21) Anmeldenummer: 12158234.0
(22) Anmeldetag: 06.03.2012
(51) Int. Cl.: A21C 5/02

(54) **Verriegelungseinrichtung zum Verriegeln und Entriegeln eines in einer Teigteilkammer eines Teigteilkammerträgers einer Teigteilmaschine aufgenommenen Innenelements und Verfahren zum Montieren der Verriegelungseinrichtung**
Locking device for locking and unlocking an internal element held in a dough divider chamber of a dough divider chamber holder of a dough dividing machine and method of mounting the locking device
Dispositif de verrouillage pour le verrouillage et le déverrouillage d'un élément intérieur installé dans une chambre de séparation de pâte d'un support de chambre de séparation de pâte d'une machine de séparation de pâte et procédé de monter ledit dispositif de verrouillage

(30) Priorität: 09.03.2011 DE 102011001160
(43) Veröffentlichungstag der Anmeldung: 12.09.2012
(73) Patentinhaber: Fortuna Maschinenbau Holding AG, 96231 Bad Staffelstein (DE)
(72) Erfinder: Moritz, Alexander, 96250 Ebensfeld (DE)
(74) Vertreter: Schröer, Gernot H.

(56) Entgegenhaltungen:
- EP-A1- 0 494 367
- EP-A1- 0 715 814
- US-A- 3 485 187

## Beschreibung

Die vorliegende Erfindung bezieht sich auf eine Verriegelungseinrichtung zum Verriegeln eines in einer Teigteilkammer eines Teigteilkammerträgers einer Teigteilmaschine aufgenommenen Innenelements. Ferner betrifft die vorliegende Erfindung einen Teigteilmaschinen-Teilkammerträger sowie ein Verfahren zum Montieren einer Verriegelungseinrichtung an einem Teigteilkammerträger.

Teigteilmaschinen dienen dazu, aus einer Teigrohmasse vorportionierte Teigrohlinge (oder: Teiglinge) zu erzeugen, die daraufhin normalerweise einer Wirkvorrichtung zugeführt werden, um diese in eine für die Endbearbeitung gewünschte Form zu bringen. Zum Erzeugen der vorportionierten Teigrohlinge ist ein Teilkammerträger mit mehreren in Reihe nebeneinander angeordneten Teilkammern vorgesehen, in denen jeweils ein hin und her bewegbarer Messkolben aufgenommen ist. Pro Teilvorgang kann dann eine der Anzahl der Teilkammern entsprechende Anzahl vorportionierter Teigrohlinge hergestellt werden. Wird nun in bestimmten Anwendungsfällen nicht die volle Kapazität der Teigteilmaschine benötigt, so ist es bekannt, den Teilkammerträger durch einen solchen mit weniger Teilkammern zu ersetzen. Weil jedoch ein Austausch von Teilkammerträgern einen erheblichen Arbeitsaufwand und die Bereitstellung von Austauschteilen erfordert, ist man dazu übergegangen, einen Teilkammerträger mit der größten in Betracht kommenden Anzahl von Teilkammern zu verwenden und bei Bedarf eine oder mehrere Teilkammern außer Betrieb zu setzen. Bei einer aus der Praxis bekannten Methode geschieht dies, indem man den Messkolben aus der stillzusetzenden Teilkammer entfernt und statt dessen einen die Öffnung der Teilkammer bündig verschließenden Pfropfen (oder: Absperrkolben) einbaut, der in dieser Lage durch eine Spreizvorrichtung festgehalten wird.

Alternativ ist es aus der DE-OS-1 632 357 bekannt, den Messkolben einer nicht benötigten Teilkammer innerhalb der Teilkammer in seiner mit der Stirnseite des Teilkammerträgers bündigen Stellung zu fixieren. Zu diesem Zweck ist bei jedem der mit einer speziell gestalteten Kolbenstange versehenen Messkolben ein Absperrriegel in Form einer Verschraubung vorgesehen, mittels der die Kolbenstange und mit ihr der Messkolben gegen den Teilkammerträger bzw. dessen Welle verspannt wird. Das Verschrauben ist jedoch sehr zeitaufwendig. Zudem sind die Verschraubungen nur schwer zugänglich.

Eine Verriegelungseinrichtung nach dem Oberbegriff des Patentanspruchs 1 ist aus der US 3 485 187 A bekannt.

Ausgehend von diesem Stand der Technik ist es eine Aufgabe der vorliegenden Erfindung, eine Verriegelung mit alternativem Aufbau zu schaffen, der mit wenig Zeitaufwand und mühelos betätigbar ist.

Diese Aufgabe wird gemäß der Erfindung gelöst mit den Merkmalen des Patentanspruchs 1. Vorteilhafte Ausgestaltungen und Weiterbildungen gemäß der Erfindung ergeben sich aus den vom Patentanspruch 1 abhängigen Patentansprüchen.

Die Verriegelungseinrichtung (oder: Absperreinrichtung) gemäß Anspruch 1 ist zum Verriegeln (oder: Absperren) und Entriegeln eines in einer Teigteilkammer eines Teigteilkammerträgers einer Teigteilmaschine aufgenommenen Innenelements, insbesondere eines Messkolbens, Absperrkolbens oder einer das Teigteilkammervolumen reduzierenden Hülse, vorgesehen und umfasst
a) eine Verriegelungsbolzeneinheit (oder: Absperrbolzeneinheit) mit einem Eingriffsbolzen (oder: Verriegelungsbolzen, Absperrbolzen), die zwischen einer verriegelten Stellung, In der der Eingriffsbolzen wenigstens teilweise in die Teigteilkammer ragt und in einer Bolzenaufnahme des Innenelements in Eingriff ist, einerseits und einer entriegelten Stellung, in der der Eingriffsbolzen nicht in die Teigteilkammer ragt und nicht in der Bolzenaufnahme des Innenelements in Eingriff ist, andererseits hin und her bewegbar ist,
b) wobei die Verriegelungsbolzeneinheit mittels eines Bajonettverschlusses in der verriegelten Stellung und/oder in der entriegelten Stellung fixierbar (oder: festlegbar, arretierbar) ist.

Ein solcher Bajonettverschluss ist dahingehend von Vorteil, dass er sich schnell und einfach betätigen lässt, weshalb Umrüstarbeiten problemlos durchgeführt werden können.

In einer bevorzugten Ausführungsform ist die Verriegelungsbolzeneinheit in einem Gehäuse geführt und in dem Gehäuse entlang einer Längsachse des Gehäuses und/oder in einer Verriegelungsrichtung zwischen der entriegelten Stellung und der verriegelten Stellung bewegbar und in der entgegen gesetzten Richtung zurück bewegbar. Das Gehäuse umfasst im Allgemeinen einen, insbesondere hohlzylindrisch um die Längsachse ausgebildeten, Gehäusemantel. Die Verriegelungsbolzeneinheit weist insbesondere eine Längsachse auf, die koaxial zu der Längsachse des Gehäuses verläuft, wenn die Verriegelungsbolzeneinheit im Gehäuse montiert ist.

In Verriegelungsrichtung gesehen weist die Verriegelungsbolzeneinheit in einer bevorzugten Ausführungsform einen um ihre Längsachse, insbesondere hohlzylindrisch oder bolzenartig, ausgebildeten oberen Abschnitt, einen, insbesondere kreisscheibenförmigen, mittleren Abschnitt, einen bolzenförmigen Zwischenabschnitt und schließlich den Eingriffsbolzen auf. Vorzugsweise ist die Verriegelungsbolzeneinheit, insbesondere in ihrem mittleren Abschnitt, mit einer, insbesondere zylindrischen, Außenumfangsfläche an der, insbesondere zylindrischen, Innenwandung des Gehäusemantels geführt.

Weiterhin kann ein, insbesondere ringförmig ausgebildeter, Gehäusedeckel mit einer zentralen Öffnung vorgesehen sein, wobei ein Teil der Verriegelungsbolzeneinheit, insbesondere der obere Abschnitt, durch die Öffnung im Gehäusedeckel geführt ist. Das Gehäuse, insbesondere der Gehäusemantel, ist nun vorzugsweise in seinem oberen Endbereich mit einem Innengewinde versehen, mit dem ein Außengewinde des Gehäusedeckels in Eingriff gebracht ist oder werden kann, wobei insbesondere zum Eindrehen des Gehäusedeckels an dessen Außenfläche Werkzeugangrifföffnungen vorgesehen sein können, in die ein entsprechend ausgebildeter Werkzeugschlüssel eingreifen kann. Außerdem kann das Gehäuse, insbesondere der Gehäusemantel, in seinem unteren Endbereich mit einem zur Längsachse hin einwärts oder nach innen vorstehenden ringförmigen Vorsprung versehen sein.

Zum Befestigen der Verriegelungseinrichtung an einer Wandung der Teigteilkammer oder des Teigteilkammerträgers weist in einer Ausgestaltung der vorliegenden Erfindung die Verriegelungseinrichtung, insbesondere an einem freien Ende, einen sich in Längsrichtung erstreckenden, insbesondere hohlzylindrischen, Befestigungsabschnitt auf, durch den sich vorzugsweise der Eingriffsbolzen erstreckt und an dessen Außenumfang bevorzugt ein Gewinde vorgesehen ist. Die Verriegelungseinrichtung kann dann einfach und schnell an einem Teilkammerträger befestigt werden, indem ihr Befestigungsabschnitt in eine am Teilkammerträger ausgebildete entsprechende Gewindebohrung eingeschraubt wird.

Insbesondere ist ein unterer Gehäuseabschluss vorgesehen, der in das Gehäuse, insbesondere den Gehäusemantel, einsetzbar ist. Der Befestigungsabschnitt kann nun an dem Gehäuse oder bevorzugt an dem unteren Gehäuseabschluss vorgesehen sein. Der untere Gehäuseabschluss sitzt innen im Gehäuse, insbesondere auf dessen ringförmigen Vorsprung, auf oder liegt dort an, so dass durch Befestigen des unteren Gehäuseabschlusses, insbesondere beim Einschrauben, das Gehäuse und somit die gesamte Verriegelungseinrichtung an der Wandung der Teigteilkammer oder des Teigteilkammerträgers befestigt, insbesondere unter der Zugkraft der Verschraubung, angezogen, wird. Der untere Gehäuseabschluss ist bevorzugt im Wesentlichen rotationssymmetrisch um eine zentrale Achse, die im montierten Zustand koaxial zur Längsachse des Gehäuses ist, ausgebildet und umfasst ferner vorzugsweise zunächst einen kreisringförmigen Basisabschnitt, dessen Außendurchmesser geringfügig kleiner als der Innendurchmesser des Gehäusemantels des Gehäuses, jedoch größer als der Innendurchmesser des ringförmigen Vorsprungs am Gehäuse oder Gehäusemantel ausgebildet ist, und einen sich an den Basisabschnitt anschließenden ebenfalls kreisringförmig ausgebildeten Mittelabschnitt, dessen Außendurchmesser geringfügig kleiner als der Innendurchmesser des ringförmigen Vorsprungs des Gehäuses ausgebildet ist, und dann den auf den Mittelabschnitt folgenden, insbesondere länglichen und hohlzylindrischen, Befestigungsabschnitt auf. Bevorzugt erstreckt sich durch den unteren Gehäuseabschluss, insbesondere durch den Basisabschnitt, den Mittelabschnitt und den Befestigungsabschnitt, die konzentrisch ausgebildet sind, entlang der Achse ein zentraler, insbesondere zylindrischer, Durchgang, in dem der Eingriffsbolzen der Verriegelungsbolzeneinheit aufgenommen und geführt ist.

In einer besonderen Weiterbildung sind an der Unterseite des Gehäuses, insbesondere seines ringförmigen Vorsprunges, wenigstens zwei, vorzugsweise diametral zur Längsachse angeordnete, Ausnehmungen zum Einsetzen von Positionierstiften, die am Teigteilkammerträger befestigt sind, zum Vorpositionieren und insbesondere zur Drehmomentaufnahme beim Anschrauben der Verriegelungseinrichtungen vorgesehen.

Zum Betätigen der Verriegelungsbolzeneinheit von außerhalb des Gehäuses ist in einer vorteilhaften Ausführungsform eine mit der Verriegelungsbolzeneinheit verbundene Betätigungseinheit vorgesehen, mit der die Verriegelungsbolzeneinheit zwischen der entriegelten Stellung und der verriegelten Stellung hin und her bewegbar ist.

Die Betätigungseinheit weist nun bevorzugt wenigstens einen Bajonettverschlusskopf des Bajonettverschlusses auf, vorzugsweise zwei, insbesondere diametral gegenüber liegende, Bajonettverschlussköpfe, wobei jeder Bajonettverschlusskopf durch einen korrespondierenden Bajonettverschlussschlitz, insbesondere einen von zwei einander diametral gegenüber liegenden Bajonettverschlussschlitzen, im Gehäuse, insbesondere im Gehäusemantel, nach außen geführt ist.

In einer vorteilhaften Ausführungsform umfasst jeder Bajonettverschlussschlitz jeweils einen sich, insbesondere parallel zur Längsachse des Gehäuses erstreckenden, Längsschlitzabschnitt und einen sich im Wesentlichen rechtwinklig anschließenden Querschlitzabschnitt auf und/oder weist wenigstens annähernd eine Winkelform oder L-Form auf.

Bevorzugt ragt jeweils in der Mitte zwischen dem Längsschlitzabschnitt und dem Querschlitzabschnitt in den Bajonettverschlussschlitz ein Überstand des Gehäuses, insbesondere Gehäusemantels. Insbesondere weist jeder Längsschlitzabschnitt in Verriegelungsrichtung gesehen zunächst einen weitgehend geraden Abschnitt mit zueinander parallelen Seiten mit Breite auf, an den sich der Querschlitzabschnitt anschließt, und dann, der Verriegelungsrichtung weiter folgend und/oder an seinem vom Querschlitzabschnitt abgewandten unteren Ende, einen erweiterten Einbringbereich (für die Betätigungseinheit) auf, der sich insbesondere von den zueinander parallelen Seiten ausgehend in Form eines Teilkreises mit dem Durchmesser erweitert, wobei der Durchmesser des Einbringbereichs größer ist als die Breite des geraden Abschnitts des Längsschlitzabschnittes. Ferner weitet sich bevorzugt auch jeder Querschlitzabschnitt ausgehend vom Längsschlitzabschnitt nach unten oder in der Verriegelungsrichtung gesehen, insbesondere wenigstens annähernd kreisförmig, von einer Breite beim Überstand auf eine größere Breite auf und bildet dadurch eine, insbesondere wenigstens annähernd kreisförmige, Anlagefläche an seiner unteren oder in Verriegelungsrichtung liegenden Seitenwand aus und/oder der Querschlitzabschnitt erstreckt sich bei der Anlagefläche weiter nach unten oder in der Verriegelungsrichtung als beim Überstand.

Im Allgemeinen erstrecken sich der Querschlitzabschnitt des ersten Bajonettverschlussschlitzes und der Querschlitzabschnitt des zweiten Bajonettverschlussschlitzes jeweils in dieselbe Drehrichtung ausgehend vom Längsschlitzabschnitt des jeweiligen Bajonettverschlussschlitz und/oder die Bajonettverschlussschlitze gehen bei Drehung des Gehäuses um 180° um die Längsachse ineinander über.

Die Verriegelungsbolzeneinheit und ihrer Verbindung mit der Betätigungseinheit kann weiterhin wie folgt ausgestaltet sein, ohne auf diese Ausgestaltungen beschränkt zu sein. In einer Ausführungsform verläuft durch die Verriegelungsbolzeneinheit, insbesondere ihren mittleren Abschnitt, ein Durchgangsloch, das an diametral einander gegenüberliegenden Öffnungen mündet und/oder dessen zentrale Achse die Längsachse der Verriegelungsbolzeneinheit in einem Mittelpunkt kreuzt. In dem Durchgangsloch ist nun bevorzugt die Betätigungseinheit befestigt, wobei das Durchgangsloch hierfür vorzugsweise ein durchgehendes Innengewinde aufweist, in das die Betätigungseinheit einschraubbar oder eingeschraubt ist. Ferner verläuft vorzugsweise durch die Verriegelungsbolzeneinheit, insbesondere durch ihren mittleren Abschnitt, quer zum Durchgangsloch ein Gewindeloch nach innen, dessen Mittelachse sich bevorzugt ebenfalls mit der zentralen Achse des Durchgangsloches und der Längsachse in dem Mittelpunkt trifft, und in das eine Feststellschraube zum Feststellen der Betätigungseinheit einschraubbar oder eingeschraubt ist.

Die Betätigungseinheit ist nun in einer vorteilhaften Ausführungsform als entlang einer Mittelachse länglich ausgebildeter Stift ausgebildet mit den zwei Bajonettverschlussköpfen an den Enden, und jeweils innen anschließend angeordneten Verbreiterungen und einer zentralen Verjüngung zwischen den beiden Verbreiterungen. Dabei haben die Bajonettverschlussköpfe und vorzugsweise auch die zentrale Verjüngung insbesondere jeweils einen Außendurchmesser, der kleiner ist als der Außendurchmesser der Verbreiterungen und insbesondere kleiner ist als die Breite des geraden Teils des Längsschlitzabschnittes und die Breite des Querschlitzabschnittes des Bajonettverschlussschlitzes des Gehäuses. Dagegen ist der Außendurchmesser der Verbreiterungen kleiner als der Durchmesser des Einbringbereiches, jedoch größer als der Durchmesser des Querschlitzabschnittes des Bajonettverschlussschlitzes, so dass die Betätigungseinheit auch im Bereich der Verbreiterungen durch den Einbringbereich in das Gehäuse einbringbar ist. Die Verbreiterungen haben bevorzugt jeweils gleiche Außengewinde, die an das Innengewinde des Durchgangsloches der Verriegelungsbolzeneinheit angepasst sind und von beiden Seiten in das Außengewinde, insbesondere mittels eines Schraubendrehers, der in eine Ausnehmung in den Bajonettverschlussköpfen (74) eingreift, einschraubbar sind. Im montierten Zustand befindet sich vorzugsweise die zentrale Verjüngung der Betätigungseinheit im Bereich des Mittelpunktes, in dem sich die Achsen kreuzen, und des Gewindeloches und ist durch die Feststellschraube festklemmbar und/oder befinden sich die beiden Bajonettverschlussköpfe in den Bajonettverschlussschlitzen und ragen durch diese nach außen.

In weiteren Varianten ist der Zwischenabschnitt der Verriegelungsbolzeneinheit über eine Ringnut, die als Reservoir für Schmiermittel zum Schmieren vorgesehen ist, mit dem Eingriffsbolzen verbunden und/oder sind der Außendurchmesser von Zwischenabschnitt und Eingriffsbolzen gleich und geringfügig kleiner als der Innendurchmesser des Befestigungsabschnittes und/oder in der Verriegelungsrichtung oder entlang der Längsachse weisen Zwischenabschnitt, die Ringnut, sofern vorhanden, und der Eingriffsbolzen gemeinsam eine größere Länge auf als der Durchgang durch den unteren Gehäuseverschluss und/oder weist der Eingriffsbolzen ein, insbesondere als Spitze oder kegelförmig ausgebildetes, Eingriffsende auf und ragt in der verriegelten Stellung mit dem Eingriffsende in die Teilkammer und in die Aufnahme des Innenelements, die insbesondere eine Schräge zum Erzeugen einer Zugkraft aufweisen kann.

In einer besonders vorteilhaften Ausführungsform ist eine Federanordnung oder allgemein eine Rückstelleinrichtung vorgesehen zum Beaufschlagen der Verriegelungsbolzeneinheit mit einer Vorspannkraft, vorzugsweise in Richtung der Verriegelungsrichtung oder zur verriegelten Stellung hin. Die Federanordnung drückt also bevorzugt den Eingriffsbolzen in die Aufnahme des Innenelementes. Beispielsweise ist die Federanordnung auf dem oder um den oberen Abschnitt der Verriegelungsbolzeneinheit angeordnet und liegt auf dem mittleren Abschnitt der Verriegelungsbolzeneinheit auf und übt auf diesen mittleren Abschnitt und damit die gesamte Verriegelungsbolzeneinheit einschließlich des Eingriffsbolzens die Vorspannkraft aus. In einer bevorzugten Ausführungsform umfasst die Federanordnung einzelne übereinander angeordnete oder aufgefädelte Tellerfedern.

In einer weiteren vorteilhaften Ausführungsform weist das Gehäuse ein Werkzeugangriffselement mit einer Werkzeugeingriffsnut für ein Werkzeug zum Betätigen der Betätigungseinheit auf, wobei das Werkzeug für jeden Bajonettverschlusskopf einen Hebel aufweist, der einen Einschnitt zur Aufnahme des jeweiligen Bajonettverschlusskopfes aufweist, wobei der Abstand der Hebel entsprechend angepasst und insbesondere größer als der Außendurchmesser des Gehäuses ist und wobei das Werkzeug bevorzugt zwischen den Hebeln eine senkrecht zu den Hebeln verlaufende Eingriffskante aufweist, die während einer Hebelbewegung zum Bewegen der Bajonettverschlussköpfe sich in der Werkzeugeingriffsnut am Werkzeugangriffselement des Gehäuses als Widerlager abstützt.

Mit den Merkmalen des Patentanspruchs 8 wird ein Teigteilkammerträger für eine Teigteilmaschine mit zumindest einer Teigteilkammer und einem in der Teigteilkammer aufgenommenen Innenelement, insbesondere einem Messkolben, Absperrkolben oder einer das Teigteilkammervolumen reduzierenden Hülse, sowie mit einer Verriegelungseinrichtung gemäß der Erfindung beansprucht, wobei die Verriegelungseinrichtung zum Verriegeln und Entriegeln des Innenelements in der Teigteilkammer vorgesehen ist, wobei insbesondere die Verriegelungseinrichtung, insbesondere ihr Gehäuse oder ihr Gehäuseabschluss ist, insbesondere mittels einer Schraubverbindung, mit einer Wandung der Teigteilkammer oder des Teigteilkammerträgers verbunden ist und/oder wobei in der Wandung ein Gewindeloch zum Einschrauben des Befestigungsabschnittes vorgesehen ist und vorzugsweise auch zwei Aufnahmeöffnungen vorgesehen sind für zwei Positionierstifte zum Vorpositionieren und zur Drehmomentaufnahme beim Anschrauben der Verriegelungseinrichtung, wobei die Aufnahmeöffnungen bevorzugt um 180° zueinander versetzt sind.

Mit den Merkmalen des Patentanspruchs 9 werden vorteilhafte Montageschritte eines Verfahrens zum Montieren einer Verriegelungseinrichtung gemäß der Erfindung angegeben.

Weitere Merkmale und Vorteile der Erfindung werden anhand der nachfolgenden Beschreibung bevorzugter Ausführungsformen unter Bezugnahme auf die beiliegende Zeichnung deutlich. Darin zeigen:
- FIG 1: eine teilweise geschnittene Vorderansicht eines wellenförmig ausgebildeten Teilkammerträgers gemäß einer Ausführungsform der vorliegenden Erfindung;
- FIG 2: eine Seitenansicht des in FIG 1 dargestellten Teilkammerträgers;
- FIG 3: eine gegenüber FIG 1 um 90° gedrehte Vorderansicht des Teilkammerträgers;
- FIG 4: eine perspektivische Teilansicht des Teilkammerträgers mit einem Positionierstift,
- FIG 5: eine vergrößerte Ansicht eines Ausschnittes des Teilkammerträgers aus FIG 2 mit zwei Drehsicherungsbolzeneinheiten und zwei Verriegelungseinrichtungen;
- FIG 6: eine Längsschnittansicht einer Verriegelungseinrichtung, insbesondere gemäß FIG 5;
- FIG 7: eine Außenansicht der in FIG 6 gezeigten und um 90° gedrehten Verriegelungseinrichtung, wobei verdeckten Komponenten gestrichelt dargestellt sind;
- FIG 8: eine Seitenansicht des Gehäuses der Verriegelungseinrichtung,
- FIG 9: das Gehäuse gemäß FIG 8 in einem Längsschnitt,
- FIG 10: das Gehäuse gemäß FIG 8 und 9 in einer Draufsicht,
- FIG 11: eine in das Gehäuse gemäß FIG 8 bis 10 einbringbare Verriegelungsbolzeneinheit in einer Seitenansicht,
- FIG 12: die Verriegelungsbolzeneinheit gemäß FIG 11 in einer um 90° gedrehten Seitenansicht,
- FIG 13: einen Gehäusedeckel für das Gehäuse gemäß FIG 8 bis 10 in einer Draufsicht,
- FIG 14: den Gehäusedeckel gemäß FIG 13 in einem Schnitt,
- FIG 15: die hauptsächlichen Komponenten der Verriegelungseinrichtung in einer Explosionsschnittdarstellung,
- FIG 16: einen ersten Messkolben im Teilkammerträger in einer schematischen Seitenansicht,
- FIG 17: den ersten Messkolben gemäß FIG 16 in einem Querschnitt,
- FIG 18: eine Hülse mit einem zweiten Messkolben in einem Teilkammerträger in einer schematischen Schnittdarstellung,
- FIG 19: ein Werkzeug zum Betätigen der Verriegelungseinrichtung in einer Seitenansicht und
- FIG 20: das Werkzeug gemäß FIG 19 in einer Draufsicht
jeweils in einer schematischen Darstellung. Einander entsprechende Teile und Größen sind in FIG 1 bis 20 mit denselben Bezugszeichen versehen.

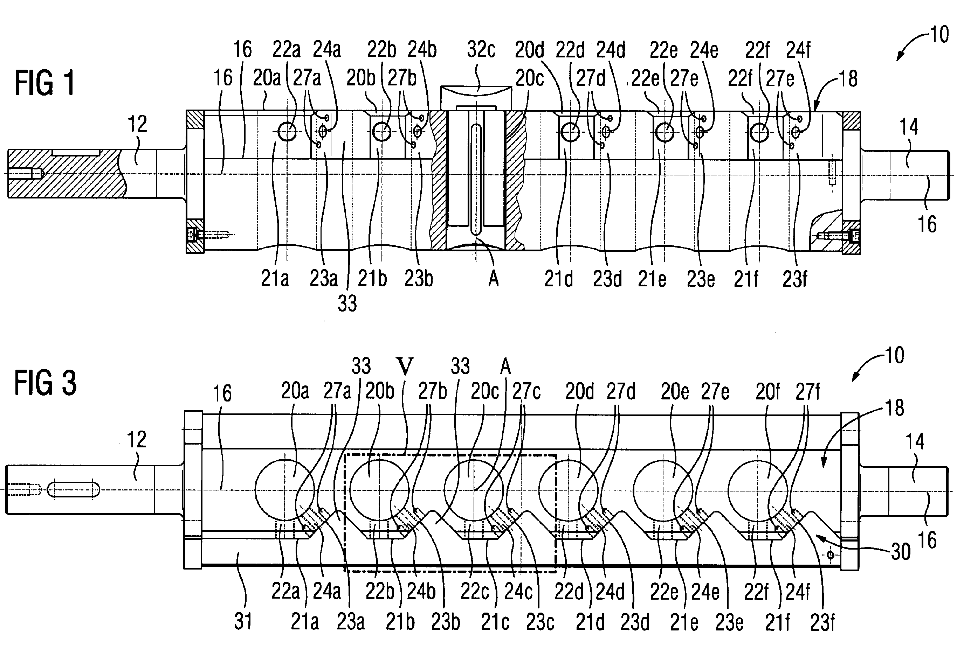

Die FIG 1 bis 4 zeigen einen Teigteilkammerträger 10 gemäß einer ersten Ausführungsform der vorliegenden Erfindung, der ein Bauteil einer ansonsten nicht näher dargestellten Teigteilmaschine darstellt. Der Teigteilkammerträger 10 ist an zwei stirnseitig angeordneten Drehzapfen 12 und 14 drehend um eine Drehachse 16 gehalten und hat eine im Wesentlichen zylindrische Grundform mit einem um die Drehachse 16 zylindrischen Außenbereich 19. An einer gegenüber dem zylindrischen Außenbereich 19 nach innen versetzten abgeflachten und eben ausgebildeten Außenfläche 18 des Teilkammerträgers 10 sind nebeneinander in Reihe mehrere, im gezeigten Ausführungsbeispiel sechs, Teigteilkammern 20a, 20b, 20c, 20d, 20e und 20f in Form von sich durch den Teilkammerträger 10 erstreckenden zylindrischen Durchgangsbereichen oder Durchgangsbohrungen vorgesehen.

In der Teigteilkammer 20a bis 20f wird in einer Ausführungsform beim aktiven Betreiben der Teigteilkammer zum Abteilen eines portionierten Teigstücks oder Teiglings von einer größeren Teigmenge ein senkrecht zur Drehachse 16 axial beweglicher und zumindest teilweise zylindrischer Kolben zum Abmessen und Auswerfen eines Teiglings aus der Teigteilkammer angeordnet, im Folgenden als erster Messkolben bezeichnet, wobei in FIG 1 nur ein einzelner erster Messkolben 32c in der Teigteilkammer 22c dargestellt ist. Ferner kann in einer anderen Ausführungsform in einer oder mehreren der Teigteilkammern 22a bis f, wenn nur ein Teilbereich des Querschnitts der Teigteilkammer benutzt werden soll und somit ein im Querschnitt kleinerer Teigling abgeteilt werden soll, eine nicht axial bewegliche Hülse, die einen zweiten axial beweglichen Messkolben, der im Querschnitt kleiner ist als der erste Messkolben, aufnimmt, angeordnet oder aufgenommen werden. In einer dritten Ausführungsform kann, wenn eine oder mehrere Teigteilkammern 22a bis 22f gar nicht benutzt und abgesperrt werden soll, auch ein axial nicht beweglicher Absperrkolben in der Teigteilkammer 22a bis 22f angeordnet werden.

Zum Erzeugen der abgeteilten Teiglinge kann der Teigteilkammerträger 10 um die Drehachse 16 zwischen einer Befüllungsstellung, in der die aktiven Teigteilkammern, in denen ein erster oder zweiter Messkolben axial beweglich ist, mit Teig befüllt werden, einerseits und einer Ausgabestellung, in der die in den Teigteilkammern abgeteilten oder portionierten Teiglinge aus den Teigteilkammern mittels der Messkolben ausgegeben oder ausgeworfen werden, andererseits hin und her gedreht werden. Der Antrieb der Messkolben zum Auswerfen kann insbesondere mittels eines gemeinsamen externen Schiebers (nicht dargestellt) erfolgen. Axial zurückbewegt werden die Messkolben bevorzugt durch den eingefüllten Teig und dessen Einfülldruck. Ein solcher Teigteilkammerträger 10 ist an sich bekannt.

Anschließend an die flachen Außenfläche 18 ist ferner im Teilkammerträger 10 an dessen Außenumfang eine nach innen sich erstreckende Ausnehmung 30 vorgesehen, die einen als flache Fläche ausgebildeten parallel zur Außenfläche 18 verlaufenden Absatz 31 aufweist und eine zum Absatz 31 und zur Außenfläche 18 senkrecht verlaufende Wand aufweist, wobei die senkrechte Wand parallel zur Drehachse 16 verlaufende senkrechte vordere Wandabschnitte 21a bis 21f vor den Teigteilkammern 22a bis 22f und V-förmige Einbuchtungen zwischen den Teigteilkammern 22a bis 22f aufweist, deren den Teigteilkammern 22a bis 22f zugewandte, schräge senkrechte Wandabschnitte mit 23a bis 23f bezeichnet sind und beispielsweise unter etwa 45° zu den vorderen Wandabschnitten 21a bis 21f gerichtet sind.

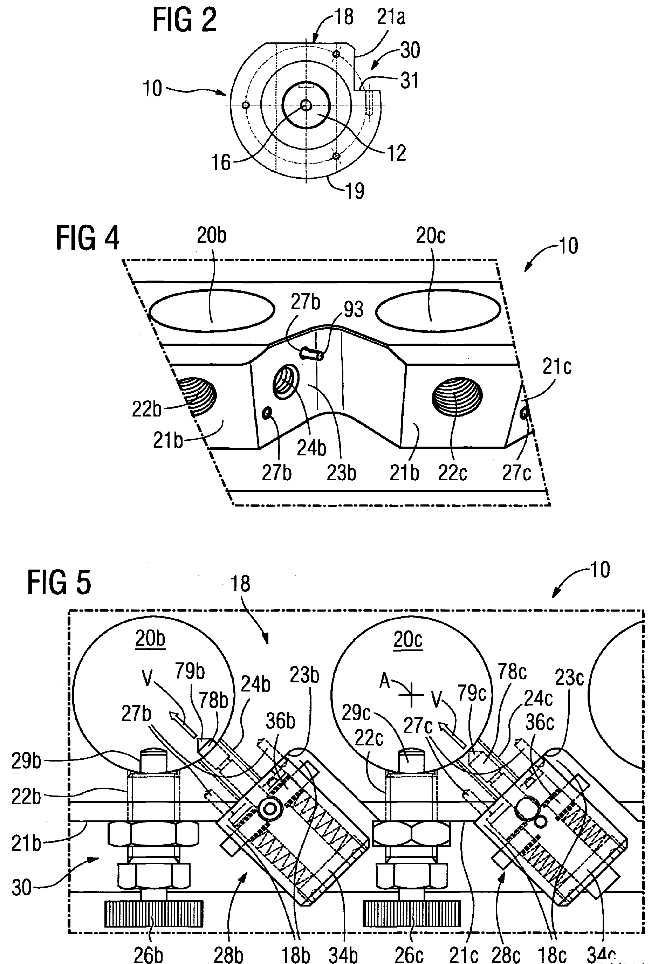

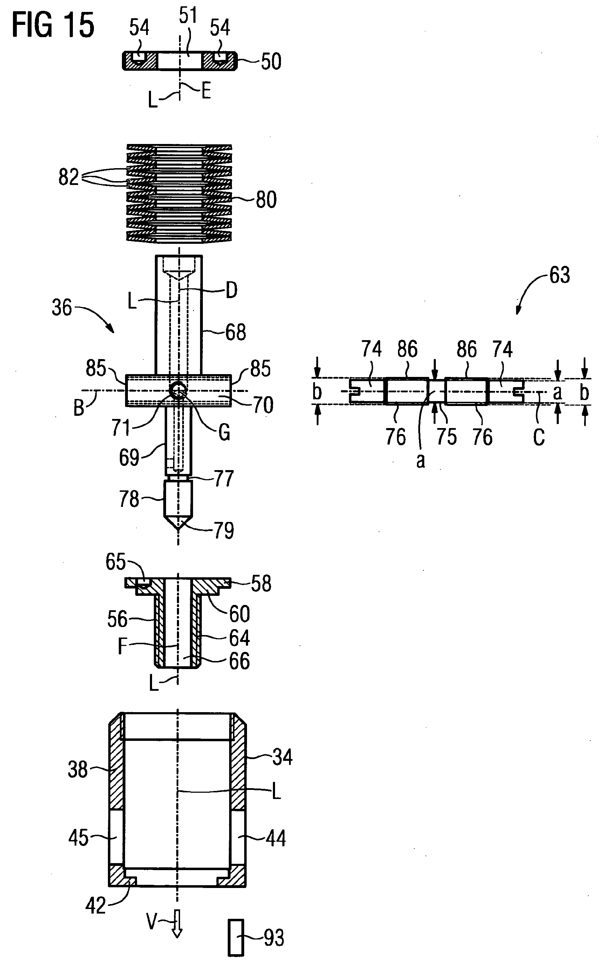

Ausgehend von den vorderen Wandabschnitten 21a bis 21f des Teilkammerträgers 10 erstrecken sich in jede zugehörige Teilkammer 20a bis 20f jeweils zugehörige Gewindelöcher (oder: Gewindebohrungen) 22a bis 22f, in die mit entsprechenden Gegengewinden in FIG 1 bis 3 nicht dargestellte Drehsicherungsbolzeneinheiten geschraubt und dadurch befestigt werden. Ausgehend von den schrägen Wandabschnitten 23a bis 23f erstrecken sich in jede zugehörige Teilkammer 20a bis 20f jeweils zugehörige Gewindelöcher (oder: Gewindebohrungen) 24a bis 24f, in die mit entsprechenden Gegengewinden in FIG 1 bis 3 nicht dargestellte Verriegelungseinrichtungen eingeschraubt und dadurch befestigt werden. An beiden Seiten der zentralen Gewindelöcher 24a bis 24f um 180° zueinander versetzt sind in den schrägen Wandabschnitten 23a bis 23f auch zwei Aufnahmeöffnungen 27a bis 27f vorgesehen für zwei Positionierstifte (nur ein Positionierstift 93 dargestellt in FIG 4 und in FIG 15) zum Vorpositionieren und zur Drehmomentaufnahme beim Anschrauben der Verriegelungseinrichtungen.

In FIG 5 sind beispielhaft an den Teigteilkammern 22b und 22c jeweils an dem zugehörigen Wandabschnitt 23b und 23c eine Verriegelungseinrichtung 28b mit einem Eingriffsbolzen 78b und eine Verriegelungseinrichtung 28c mit einem Eingriffsbolzen 78c und an dem zugehörigen Wandabschnitt 21b und 21c jeweils eine Drehsicherungsbolzeneinheit 26b und 26c dargestellt. Die Verriegelungseinrichtungen 28b und 28c sowie die Drehsicherungsbolzeneinheiten 26b und 26c sind jeweils in den entsprechenden Gewindelöchern 22b oder 22c oder 24b und 24c befestigt und die Ausnehmung 30 stellt den erforderlichen Bauraum zur Verfügung.

Die Verriegelungseinrichtung 28b links in FIG 5 ist in einer verriegelten oder gesperrten Stellung dargestellt, d.h. das Eingriffsende 79b ihres Eingriffsbolzens 78b ragt in die Teigteilkammer 22b, während die Verriegelungseinrichtung 28c rechts in FIG 5 in einer entriegelten oder nicht sperrenden Stellung dargestellt ist, d.h. das Eingriffsende 79c ihres Eingriffsbolzens 78c ragt nicht in die Teigteilkammer 22c. Die Verriegelungsrichtung als Bewegungsrichtung des Eingriffsbolzens 78b oder 78c von der entriegelten Stellung in die verriegelte Stellung, also in die Teigteilkammer hinein, ist mit einem Pfeil dargestellt und mit V bezeichnet.

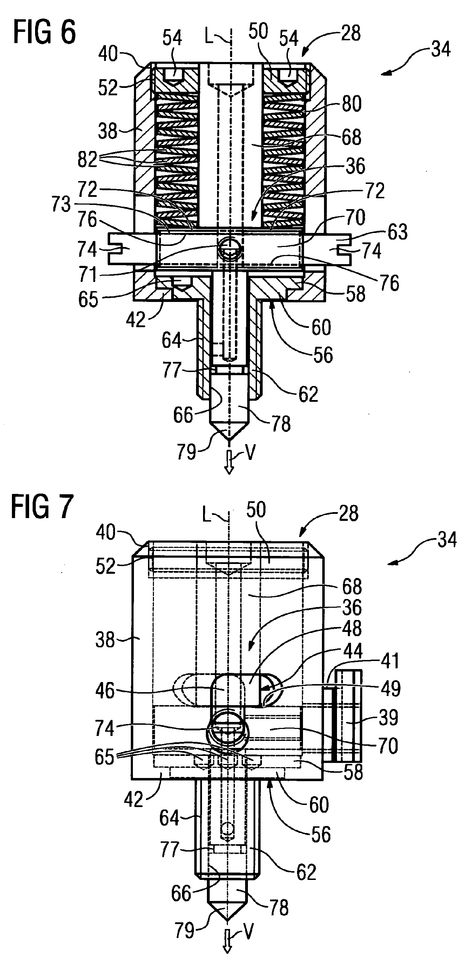

Die FIG 6 und 7 zeigen eine Verriegelungseinrichtung 28, die insbesondere als Verriegelungseinrichtung 28b oder 28c in FIG 5 geeignet ist, im Detail.

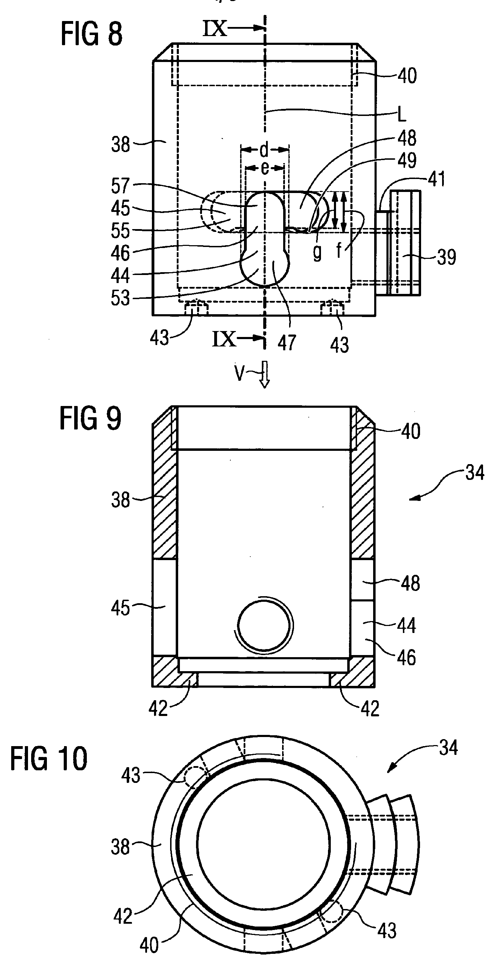

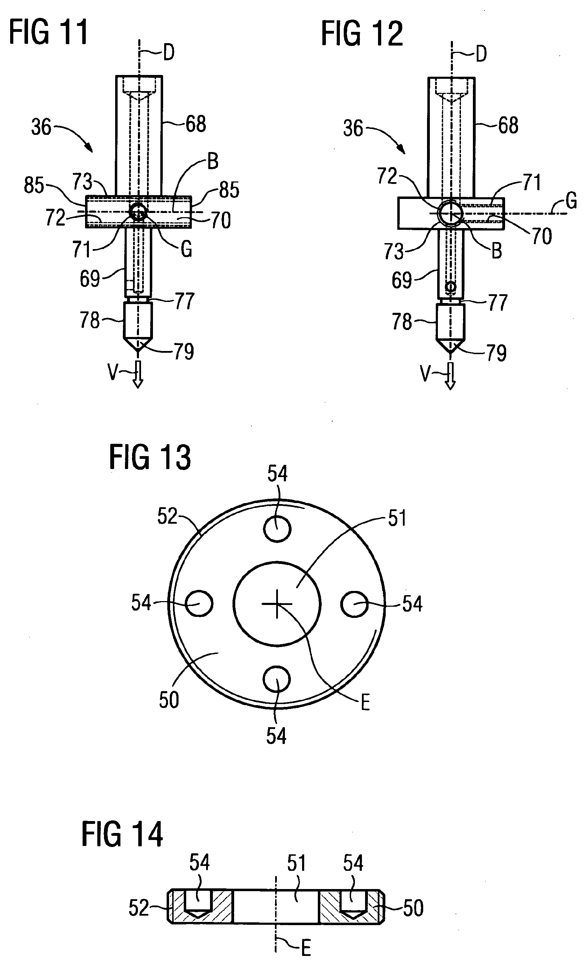

Die Verriegelungseinrichtung 28 gemäß FIG 6 und 7 umfasst ein Gehäuse 34 (in FIG 8 bis 10 nochmals allein sowie in FIG 15 dargestellt), einen Gehäusedeckel 50 (in FIG 13 und 14 nochmals allein sowie in FIG 15 dargestellt), einen unteren Gehäuseabschluss 56 mit Befestigungsabschnitt 62 (auch in FIG 15 dargestellt), eine in dem Gehäuse 34 geführte Verriegelungsbolzeneinheit 36 mit Eingriffsbolzen 78 (in FIG 11 und 12 nochmals allein sowie in FIG 15 dargestellt), eine Betätigungseinheit 63 mit Bajonettverschlussköpfen 74 zum Betätigen der Verriegelungsbolzeneinheit 36 (auch in FIG 15 dargestellt) und schließlich eine Federeinrichtung 80 (auch in FIG 15 dargestellt) zum Beaufschlagen der Verriegelungsbolzeneinheit 36 mit einer Vorspannkraft in Richtung der Verriegelungsrichtung V.

Das Gehäuse 34 umfasst einen hohlzylindrisch um die Längsachse L ausgebildeten Gehäusemantel 38, der in seinem oberen Endbereich mit einem Innengewinde 40 versehen ist. Am gegenüber liegenden unteren Endbereich ist ein radial zur Längsachse L einwärts vorstehender ringförmiger Vorsprung (oder: Sockel, Sims) 42 ausgebildet. An der Unterseite des ringförmigen Vorsprungs sind zwei diametral zur Längsachse L angeordnete Ausnehmungen 43 zum Einsetzen der Positionsstifte 93 vorgesehen. Außerdem weist das Gehäuse 34 noch an einer Seite eine Werkzeugaufnahme 36 mit einer Aufnahmenut 41 auf.

Der ringförmig ausgebildete Gehäusedeckel 50 ist mit einer um eine zentrale Achse E, die im montierten Zustand koaxial zur Längsachse L des Gehäuses 34 ist, kreisförmigen oder zylindrischen zentralen Öffnung 51 und einem Außengewinde 52, das mit dem Innengewinde 40 des Gehäusemantels 38 in Eingriff gebracht werden kann, am Außenumfang versehen. Zum Verschrauben der Gewinde 40 und 52 und damit Einbringen des Gehäusedeckels 50 in das Gehäuse 34 an dessen oberem Ende sind an der Außenfläche des oberen Gehäusedeckels 50 Werkzeugangrifföffnungen 54 vorgesehen, in die ein entsprechend ausgebildeter Werkzeugschlüssel eingreifen kann.

Der untere Gehäuseabschluss 56 ist bevorzugt im Wesentlichen rotationssymmetrisch ausgebildet um eine zentrale Achse F, die im montierten Zustand koaxial zur Längsachse L des Gehäuses 34 ist, und umfasst zunächst einen kreisringförmigen Basisabschnitt 58, dessen Außendurchmesser geringfügig kleiner als der Innendurchmesser des Gehäusemantels 38 des Gehäuses 34, jedoch größer als der Innendurchmesser des ringförmigen Vorsprungs 42 am Gehäusemantel 38 ausgebildet ist. An den Basisabschnitt 58 schließt sich in der Verriegelungsrichtung V ein ebenfalls kreisringförmig ausgebildeter Mittelabschnitt 60 an, dessen Außendurchmesser geringfügig kleiner als der Innendurchmesser des ringförmigen Vorsprungs 42 des Gehäuses 34 ausgebildet ist. Auf den Mittelabschnitt 60 folgt in der Verriegelungsrichtung V dann ein länglicher hohlzylindrischer Befestigungsabschnitt 62, der mit einem Außengewinde 64 versehen ist und zur Befestigung der gesamten Verriegelungseinrichtung 28 an dem Teigteilkammerträger 10, insbesondere an dessen Wandabschnitten 23a bis 23f durch Einschrauben des Außengewindes 64 in eines der Gewindelöcher 24a bis 24f dient. Durch den Basisabschnitt 58, den Mittelabschnitt 60 und den Befestigungsabschnitt 62, die konzentrisch ausgebildet sind, erstreckt sich entlang der Achse F eine zentrale zylindrische Durchgangsbohrung 66, die zur Aufnahme und Führung des Eingriffsbolzens 78 der Verriegelungsbolzeneinheit 36 vorgesehen ist.

An seiner Mantelfläche ist der Gehäusemantel 38 mit zwei einander diametral oder um etwa 180° versetzt gegenüber liegenden Bajonettverschlussschlitzen 44 und 45 versehen, die jeweils einen sich axial parallel zur Längsachse L des Gehäuses 34 erstreckenden Längsschlitzabschnitt 46 und einen sich an einem oberen Ende im Wesentlichen rechtwinklig anschließenden Querschlitzabschnitt 48 aufweisen, so dass die Bajonettverschlussschlitzen 44 und 45 wenigstens annähernd eine Winkelform oder L-Form aufweisen. Jeweils in der Mitte zwischen dem Längsschlitzabschnitt 46 und dem Querschlitzabschnitt 48 ragt in den Bajonettverschlussschlitz 44 und 45 ein Überstand 53 des Gehäusemantels 38.

Der Längsschlitzabschnitt 46 weist in Verriegelungsrichtung V gesehen zunächst einen weitgehend geraden Abschnitt mit zueinander parallelen Seiten mit Abstand oder Breite e, an den sich der Querschlitzabschnitt 48 anschließt, und dann der Verriegelungsrichtung V folgend und/oder an seinem vom Querschlitzabschnitt 48 abgewandten unteren Ende einen erweiterten Einbringbereich 47 auf, der sich von den zueinander parallelen Seiten ausgehend in Form eines Teilkreises mit dem Durchmesser d erweitert. Der Durchmesser d des kreisförmigen Einbringbereichs 47 ist also größer als der Abstand der parallelen Seiten oder die Breite e des geraden Abschnitts des Längsschlitzabschnittes 46.

Der Querschlitzabschnitt 48 weitet sich ausgehend vom Längsschlitzabschnitt 46 ebenfalls nach unten oder in der Verriegelungsrichtung V gesehen wenigstens annähernd kreisförmig auf von einer Breite g beim Überstand 53 auf eine Breite f, die größer ist als die Breite g, und bildet dadurch eine wenigstens annähernd kreisförmige Anlagefläche 49 an seiner unteren oder in Verriegelungsrichtung V liegenden Seitenwand aus, so dass sich also der Querschlitzabschnitt 48 bei der Anlagefläche 49 weiter nach unten oder in Verriegelungsrichtung V erstreckt als beim Überstand 53.

Der Querschlitzabschnitt 48 des Bajonettverschlussschlitzes 44 und der Querschlitzabschnitt 55 des Bajonettverschlussschlitzes 45 ragen jeweils in dieselbe Dreh- oder Umfangsrichtung ausgehend vom Längsschlitzabschnitt 46 bzw. 57 des jeweiligen Bajonettverschlussschlitz 44 und 45, so dass die Bajonettverschlussschlitze 44 und 45 bei Drehung des Gehäuses 34 um 180° um die Längsachse L ineinander übergehen, also eine Drehsymmetrie um 180° aufweisen.

Die Verriegelungsbolzeneinheit 36 weist eine Längsachse D auf, die koaxial zur Verriegelungsrichtung V gerichtet ist und auch koaxial zur Längsachse L des Gehäuses 34 verläuft, wenn die Verriegelungsbolzeneinheit 36 im Gehäuse 34 montiert ist. In Verriegelungsrichtung V oder von oben nach unten gesehen weist die Verriegelungsbolzeneinheit 36 einen um die Längsachse D hohlzylindrisch ausgebildeten Halte- oder Trägerbolzen als oberen Abschnitt 68, einen kreisscheibenförmigen mittleren Abschnitt 70, einen bolzenförmigen Zwischenabschnitt 69 und schließlich den Eingriffsbolzen 78 auf.

Der Außendurchmesser des oberen Abschnittes 68 ist geringfügig kleiner als der Innendurchmesser der Öffnung 51 im Gehäusedeckel 50, so dass der obere Abschnitt 68 durch die Öffnung 51 im Gehäusedeckel 50 geführt ist. Der Außendurchmesser des kreisscheibenförmigen mittleren Abschnittes 70 ist geringfügig kleiner als der Innendurchmesser des Gehäusemantels 38, so dass die zylindrische Außenumfangsfläche des mittleren Abschnittes 70 an der zylindrischen Innenwandung des Gehäusemantels 38 geführt ist.

Durch den mittleren Abschnitt 70 verläuft zentral ein Durchgangsloch 72, das an der Außenumfangsfläche des mittleren Abschnitts 70 an diametral einander gegenüberliegenden Öffnungen 85 mündet und das ein durchgehendes Innengewinde 73 aufweist. Die zentrale Achse B des Durchgangsloches 72 kreuzt die Längsachse D in einem Mittelpunkt. Das Durchgangsloch 72 ist zur Aufnahme der Betätigungseinheit 63 vorgesehen, wie noch beschrieben wird.

Von nur einer Seite an der Außenumfangsfläche des mittleren Abschnittes 70 verläuft quer zum Durchgangsloch 72 ein weiteres Gewindeloch 71 nach innen, dessen Gewindeachse oder Mittelachse G sich ebenfalls mit der zentralen Achse B des Durchgangsloches 72 und der Längsachse D in dem Mittelpunkt trifft. Das Gewindeloch 71 dient zum Einschrauben einer - nicht dargestellten - Feststellschraube zum Feststellen der Betätigungseinheit 63 durch Klemmen der Stirnfläche der Feststellschraube gegen die zentrale Verjüngung 75 der Betätigungseinheit 63 und kann auch zum Zuführen von Schmiermittel dienen.

Ferner umfasst die Verriegelungsbolzeneinheit 36 einen sich an den mittleren Abschnitt 70 anschließenden zylindrischen Zwischenabschnitt 69, der über eine Ringnut 77, die als Reservoir für Schmiermittel zum Schmieren vorgesehen ist, mit einem den Eingriffsbolzen 78 bildenden unteren Abschnitt verbunden ist. Der Außendurchmesser von Zwischenabschnitt 69 und Eingriffsbolzen 78 ist bevorzugt gleich und geringfügig kleiner als der Innendurchmesser des Befestigungsabschnittes 62 des unteren Gehäuseverschlusses 56. In der Verriegelungsrichtung V oder entlang der Längsachse L weisen Zwischenabschnitt 69, Ringnut 77 und Eingriffsbolzen 78 gemeinsam eine größere Länge auf als die Durchgangsbohrung 66 durch den unteren Gehäuseverschluss 56.

Der Eingriffsbolzen 78 der Verriegelungsbolzeneinheit 36 ist von einer entriegelten Stellung in eine verriegelten Stellung in der Verriegelungsrichtung V entlang der Längsachse L des Gehäuses 34 relativ zum Gehäuse 34 und auch wieder zurück bewegbar und weist ein als Spitze oder kegelförmig ausgebildetes Eingriffsende 79 (siehe auch FIG 5) auf.

Die Betätigungseinheit 63 dient zum Bewegen des Eingriffsbolzens 78 und ist als entlang einer Mittelachse C länglich ausgebildeter Stift oder Bolzen ausgebildet mit den zwei Bajonettverschlussköpfen 74, die Schlitze zum Angreifen eines Schraubendrehers aufweisen, an den Enden und jeweils innen anschließend angeordneten Verbreiterungen 86 und einer zentralen Verjüngung 75 zwischen den beiden Verbreiterungen 86. Die Bajonettverschlussköpfe 74 und vorzugsweise auch die zentrale Verjüngung 75 haben jeweils einen Außendurchmesser a, der kleiner ist als der Außendurchmesser b der Verbreiterungen 86 und kleiner ist als die Breite e des geraden Teils des Längsschlitzabschnittes 46 und die Breite g des Querschlitzabschnittes 48 des Bajonettverschlussschlitzes 44 (oder 45) des Gehäuses 34. Die Verbreiterungen 86 haben jeweils gleiche Außengewinde 76, die an das Innengewinde 73 des Durchgangsloches 72 in dem mittleren Abschnitt 70 der Verriegelungsbolzeneinheit 36 angepasst sind und von beiden Seiten in das Außengewinde 76 mittels eines Schraubendrehers, der in einen der Schlitze in den Bajonettverschlussköpfen 74 eingreift, einschraubbar sind, bis sich die Verjüngung 75 zentral im Bereich des Mittelpunktes, in dem sich die Achsen B, C und D kreuzen, und des Gewindeloches 71 befindet und durch die Feststellschraube festklemmbar ist. Der Außendurchmesser b der Verbreiterungen 86 ist kleiner als der Durchmesser d des Einbringbereiches 47, jedoch größer als der Durchmesser f des Querschlitzabschnittes 48 des Bajonettverschlussschlitzes 44 (oder 45).

Im eingeschraubten Zustand der Betätigungseinheit 63 befinden sich die beiden Bajonettverschlussköpfe in den Bajonettverschlussschlitzen 44 und 45.

Schließlich ist auf dem oder um den Haltebolzen oder oberen Abschnitt 68 der Verriegelungsbolzeneinheit 36 eine Federanordnung 80 angeordnet, die auf dem scheibenförmigen mittleren Abschnitt 70 der Verriegelungsbolzeneinheit 36 aufliegt und auf diesen mittleren Abschnitt 70 und damit die gesamte Verriegelungsbolzeneinheit 36 einschließlich des Eingriffsbolzens 78 eine Vorspannkraft K in der Verriegelungsrichtung V ausübt. Die Federanordnung 80 umfasst bevorzugt einzelnen übereinander angeordnete Tellerfedern 82, kann aber auch z.B. eine Schraubenfeder umfassen.

Bei der Montage der Verriegelungseinrichtung 28 oder 28b oder 28c am Teigteilkammerträger 10 wird vorzugsweise wie folgt vorgegangen:

In einem ersten Montageschritt wird das Gehäuse 34 mittels der zwei Positionierstifte 93 in den Ausnehmungen 43 einerends und 27a bis 27f andernends an dem Wandabschnitt 23a bis 23f am Teigteilkammerträger 10 vorpositioniert.

In einem zweiten Montageschritt wird der untere Gehäuseverschluss 56 durch die obere Öffnung in den Gehäusemantel 38 eingebracht und der Befestigungsabschnitt 62 wird mit seinem Außengewinde 64 in das Innengewinde eines Gewindeloches 24a bis 24f am Teigteilkammerträger 10 mittels eines in die Werkzeugaufnahmeöffnungen 65 eingreifenden Werkzeuges eingeschraubt, bis der Basisabschnitt 58 an dem ringförmigen Vorsprung 42 des Gehäuses 34 zur Anlage kommt und zusammen mit dem Mittelabschnitt 60 die Öffnung im ringförmigen Vorsprung 42 im Wesentlichen abdichtet. Die Positionierstifte 93 werden dabei mit festgezogen und nehmen Drehmomente beim Einschrauben und auch später im Betrieb auf zum Schutz vor einem Verdrehen oder Herausdrehen der Gewinde.

Nun wird in einem dritten Montageschritt die Verriegelungsbolzeneinheit 36 in den Gehäusemantel 38 eingesetzt, wobei der Zwischenabschnitt 69 und der Eingriffsbolzen 78 in die Durchgangsbohrung 66 des unteren Gehäuseverschlusses 56 eingeführt wird.

In einem vierten Montageschritt wird die Betätigungseinheit 63 an der Verriegelungsbolzeneinheit 36 montiert, indem ein erster Bajonettverschlusskopf 74 durch einen Einbringbereich 47 eines Bajonettverschlussschlitzes 44 oder 45 an einer ersten Seite des Gehäusemantels 38 hindurchgeführt wird und die beiden Verbreiterungen 86 mit ihren Außengewinden 76 solange in das Innengewinde 73 des Durchgangsloches 72 eingeschraubt werden, bis der erste Bajonettverschlusskopf 74 an der anderen Seite des Gehäusemantels 38 durch den anderen Bajonettverschlussschlitzes 44 oder 45 wieder herausragt und der zweite Bajonettverschlusskopf 74 aber noch an der ersten Seite des Gehäusemantels 38 aus dem Bajonettverschlussschlitzes 44 oder 45 herausragt sowie die zentrale Verjüngung 75 im Bereich des Gewindeloches 71 liegt.

Nun wird in einem fünften Montageschritt in das Gewindeloch 71 eine Feststellschraube zum Feststellen der Betätigungseinheit 63 im Bereich der Verjüngung 75 eingeschraubt.

Die Betätigungseinheit 63 ist nun fest mit der Verriegelungsbolzeneinheit 36 verbunden und bei Angreifen und Bewegen der Bajonettverschlussköpfe 74 in den zugehörigen Bajonettverschlussschlitzen 44 oder 45 bewegt sich die Verriegelungsbolzeneinheit 36 innerhalb des Gehäuses 34 mit und zwar bei Bewegung innerhalb des Längsschlitzabschnittes 46 axial zur Längsachse L in oder entgegensetzt zur Verriegelungsrichtung V und bei Bewegung innerhalb des Querschlitzabschnittes 48 in Umfangs- oder Drehrichtung um die Längsachse L.

In einem sechsten Montageschritt wird die Federanordnung 80, insbesondere nacheinander die Tellerfedern 82 über den oberen Abschnitt 68 gestülpt oder angeordnet und stützt sich dann auf dem mittleren Abschnitt 70 ab.

In einem siebten Montageschritt schließlich wird der Gehäusedeckel 50 mit seinem Außengewinde 52 in das Innengewinde 40 des Gehäusemantels 38 eingeschraubt mittels eines in die Ausnehmungen 54 eingreifenden Werkzeugs. Der Gehäusedeckel 50 drückt die Federanordnung 80 als Gegenlager gegen den mittleren Abschnitt 70 und komprimiert oder spannt die Federanordnung 80 dadurch vor zum Erzeugen einer Vorspannkraft K auf die Verriegelungsbolzeneinheit 36 in der Verriegelungsrichtung V.

Zum Verriegeln des Eingriffsbolzens 78, d.h. Bewegen in der Verriegelungsrichtung V, werden die Bajonettverschlussköpfe 74 aus den Ruhepositionen, bei denen sie auf den Anlageflächen 49 der Querschlitzabschnitte 48 aufliegen, in den Querschlitzabschnitten 48 in Richtung zu den Längsschlitzabschnitten 46 bewegt oder um die Längsachse L gedreht und dann von der Federanordnung 80 durch die Vorspannkraft K nach unten in den Längsschlitzabschnitten 46 bis in den Einbringabschnitt 47 gedrückt. Nun ist der Eingriffsbolzen 78 in Verriegelungsrichtung V am Weitesten nach außen stehend und somit in seinem Verriegelungszustand.

Zum Entriegeln des Eingriffsbolzens 78 werden die Bajonettverschlussköpfe 74 umgekehrt entgegen der Vorspannkraft K der Federanordnung 80 und entgegen der Verriegelungsrichtung V durch die Vorspannkraft K der Tellerfedern 80 linear in den Längsschlitzabschnitten 46 bewegt und dann seitlich in die Querschlitzabschnitte 48 bis zu den Ruhepositionen, bei denen sie auf den Anlageflächen 49 der Querschlitzabschnitte 48 aufliegen, um die Längsachse L gedreht oder bewegt. Nun ist der Eingriffsbolzen 78 in Verriegelungsrichtung V innen stehend und somit in seinem Entriegelungszustand.

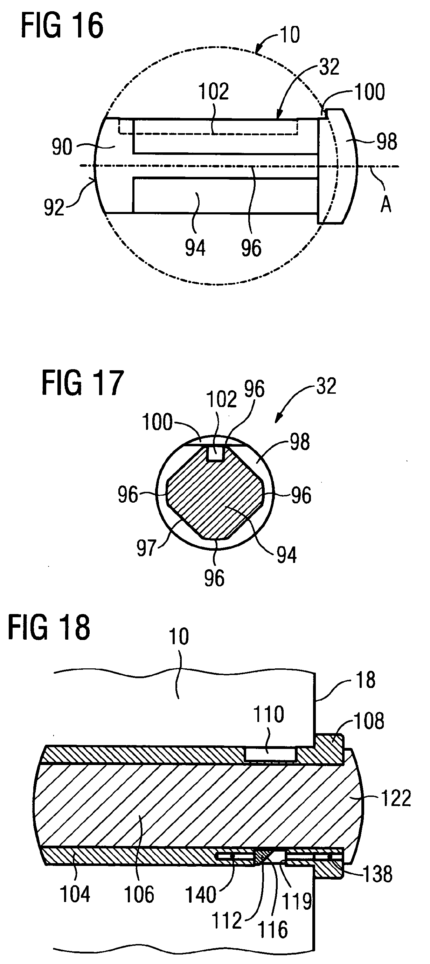

Die FIG 16 und 17 zeigen einen ersten Messkolben 32, der in eine der Teigteilkammern 22a bis 22f einsetzbar und darin axial bewegbar ist sowie mittels der Verriegelungseinrichtung 28, 28b oder 28c in eine feste axiale Position in der Teigteilkammer verriegelbar oder fixierbar ist. Der erste Messkolben 32 umfasst einen vorderen, im Querschnitt kreisförmigen Messkolbenbereich 90, dessen Durchmesser geringfügig kleiner als derjenige der zugeordneten Teilkammer 20a, b, c, d, e, f ist und dessen Stirnseite 92 an die unmittelbar angrenzenden Bereiche der Außenkontur des Teilkammerträgers 10 formangepasst ist. An den vorderen Messkolbenbereich 90 schließt sich ein mittlerer Messkolbenbereich 94 mit im Wesentlichen viereckigen Querschnitt an, wobei die Ecken des viereckigen Querschnitts derart abgerundet sind, dass Konturabschnitte 96 vorhanden sind, die auf einem Kreisbogen mit dem Durchmesser des vorderen Messkolbenbereiches 90 liegen. An den mittleren Messkolbenbereich 94 schließt sich ein Messkolbenflansch 98 an, an dem ein abgeflachter Bereich 100 vorgesehen ist. Am Außenumfang des ersten Messkolbens 32 erstreckt sich über Teile des vorderen Messkolbenbereichs 90 und über Teile des mittleren Messkolbenbereichs 94 eine sich in Längsrichtung des ersten Messkolbens 32 erstreckende Messkolbennut 102.

In demjenigen Zustand, in dem der erste Messkolben 32 in die zugehörige Teilkammer 20a, b, c, d, e, f des Teilkammerträgers 10 vollständig eingesetzt ist, stützen sich der vordere Messkolbenbereich 90 sowie die Konturabschnitte 96 des mittleren Messkolbenbereiches 94 an der Wand der zugehörigen Teilkammer 20a, b, c, d, e, f ab, so dass der erste Messkolben 32 ohne Erzeugung nennenswerter Kippmomente und bei geringerer Reibung innerhalb der zugehörigen Teilkammer 20a, b, c, d, e, f axial zur Achse A hin und her beweglich verschiebbar ist. In vollständig eingesetztem Zustand schließt die Stirnseite 92 des ersten Messkolbens 32 im Wesentlichen bündig mit der Außenkontur des Teilkammerträgers 10 ab.

In die Messkolbennut 102 greift der in FIG 4, nicht aber in FIG 16 und 17, dargestellte Rastbolzen, z.B. 29b oder 29c, der in das entsprechende Gewindeloch 22b oder 22c geschraubten Rastbolzeneinheit 26b oder 26c ein, wodurch ein Verdrehen des ersten Messkolbens 32 innerhalb der zugehörigen Teilkammer 20a bis 20f verhindert wird (Verdrehsicherung) bei gleichzeitig möglicher axialer Bewegung.

Ferner weist der Messkolben 32 eine in FIG 16 und 17 nicht gezeigte, jedoch anhand von FIG 18 nachfolgend erläuterte Aufnahme zum Eingriff des Eingriffsbolzens 78 der Verriegelungseinrichtung 28 auf, so dass der erste Messkolben 32 in einer axialen Stellung in der Teilkammer 20a bis 20f verriegelbar oder fixierbar ist und diese abschließt, so dass sie außer Betrieb bleibt.

Die FIG 18 zeigt eine Hülse 104 mit darin geführtem zweiten Messkolben 106. Die Hülse 104 weist eine im Wesentlichen hohlzylindrische Form auf. Am freien Ende der Hülse 104 ist analog zum ersten Messkolben 32 ein Hülsenflansch 108 ausgebildet, der im eingefahrenen Zustand auf der Außenfläche 18 des Teigteilkammerträgers 10 aufliegt. Am Außenumfang der Hülse 104 ist eine sich in Längsrichtung der Hülse 104 erstreckende Hülsennut 110 vorgesehen.

Zur Arretierung der Hülse 104 in einer der Teilkammern 20a, b, c, d, e, f ist ein, beispielsweise aus Metall wie z.B. einem Stahl, hergestelltes Hülseneinsetzteil 112 in eine entsprechende, am Außenumfang der Hülse 104 vorgesehene Hülseneinsetzöffnung 114 eingesetzt. Das Hülseneinsetzteil 112 ist mit einer eine Schrägfläche 116 aufweisenden Bolzenaufnahmeöffnung 119 zur Aufnahme des in FIG 18 nicht gezeigten Eingriffsbolzens 78 der Verriegelungseinrichtung 28 versehen. Die Außenkontur des Hülseneinsetzteils 112 schließt im in die Hülseneinsetzöffnung 114 der Hülse 104 eingesetzten Zustand mit der Außenkontur der Hülse 104 bündig ab. Das Hülseneinsetzteil 112 ist mit zwei Durchgangsbohrungen 120 versehen, die zur Aufnahme von Gewindestiften zur Fixierung des Hülseneinsetzteils 112 an der Hülse 104 vorgesehen sind.

Der zweite Messkolben 106 weist eine im Wesentlichen zylindrische Form auf und ist an seinem freien Ende mit einem Messkolbenflansch 122 versehen. Beispielsweise durch Formgebung seiner Außenform kann der zweite Messkolben 106 verdrehgesichert und axial beweglich in der Hülse 104 geführt sein, beispielsweise mittels eines an der Hülse 104 gehaltenen Führungsstiftes, der an einer sich axial erstreckende Führungsaussparung des Messkolbens 106 geführt ist.

Im Rahmen einer Vormontage wird zunächst das Hülseneinsetzteil 112 in die Hülseneinsetzöffnung 114 eingesetzt und mittels in an der Hülse 104 vorgesehene Gewindebohrungen 138 und Bohrungen 140 eingesetzten Gewindestiften (nicht gezeigt) an der Hülse 104 festgelegt. Daraufhin wird der zweite Messkolben 106 in die Hülse 104 eingesetzt.

Soll nunmehr das Teigteilvolumen einer Teilkammer 20a, b, c, d, e, f mit einem ersten Messkolben 32 reduziert werden, so wird die zugehörige Verriegelungseinrichtung 28 in ihre entriegelte Stellung überführt und in dieser gesperrt, woraufhin der erste Messkolben 32 aus der entsprechenden Teilkammer 20a, b, c, d, e, f entnommen wird. Daraufhin wird die Hülse 104 mit dem darin aufgenommenen zweiten Messkolben 106 in die zugeordnete Teilkammer 20a, b, c, d, e, f geführt eingesetzt, so dass sich die Hülse 104 nicht innerhalb der Teilkammer 20a, b, c, d, e, f verdrehen kann.

Nun wird der Eingriffsbolzen 78 in die Bolzenaufnahmeöffnung 119 des Hülseneinsetzteils 112 unter Betätigung der Bajonettverschlussköpfe 74 in Eingriff gebracht oder eingerastet, wodurch eine Fixierung der Hülse 104 innerhalb der Teilkammer 20a, b, c, d, e, f erfolgt.

Bei der Eingriffsbewegung in Verriegelungsrichtung V gleitet die konische Außenfläche des Eingriffsendes 79 des Eingriffsbolzens 78 auf der Schrägfläche 116 der Bolzenaufnahmeöffnung 119 und es wird neben einem geführten Eingriff auch eine axiale Kraft erzeugt, die den Hülsenflansch 108 zusätzlich gegen die Außenfläche 18 des Teigteilkammerträgers 10 zieht und die Abdichtung am Hülsenflansch 108 unterstützt.

Nunmehr kann der zweite Messkolben 106 die Funktion des ersten Messkolbens 32 unter Reduzierung des Volumens der Teilkammer 20a, b, c, d, e, f übernehmen.

Der erste Messkolben gemäß FIG 16 und 17 kann analog an seinem Außenumfang ein Einsetzteil für den Eingriffsbolzen 78 aufweisen, das dem Hülseneinsetzteil 112 entspricht.

Schließlich kann alternativ eine (oder mehrere) Teigteilkammer 22a bis 22f auch ganz außer Betrieb gesetzt werden oder blockiert oder abgesperrt werden mittels eines nicht dargestellten Absperrkolbens, der ähnlich wie die Hülse 104, jedoch mit wesentlich einfacherem einteiligem Aufbau ausgebildet sein kann, da nur die Teigteilkammer abgedichtet und gegenüber dem Teig gesperrt werden muss, jedoch keine axiale Bewegung stattfindet. Beispielsweise kann ein einfacher zylindrischer oder hohlzylindrischer Kolben mit einem Kolbenflansch ähnlich wie die Stirnseite 92 des ersten Messkolbens sowie einem Einsetzteil, das dem in den FIG 17 dargestellten Hülseneinsetzteil 112 entspricht, zum Aufnehmen des Eingriffsbolzens 78 vorgesehen sein.

Soll also eine der Teilkammern 20a, b, c, d, e, f des Teilkammerträgers 10 blockiert werden, so wird der Absperrkolben in die entsprechende Teilkammer 20a, b, c, d, e, f eingesetzt und durch Betätigung der Bajonettverschlussköpfe 74 wird der Eingriffsbolzen 78 in die Verriegelungsstellung überführt und der Absperrkolben ist fixiert, so dass ein Kolbenhub des Absperrkolbens verhindert wird.

Der erste Messkolben 32 oder der zweite Messkolben 106 oder der Absperrkolben ist im Allgemeinen aus einem Kunststoff, insbesondere einem Kunststoff aus oder auf Basis von POM, hergestellt. Die Hülse 104 ist im Allgemeinen aus einem Kunststoff, insbesondere einem Kunststoff aus oder auf Basis von PET, hergestellt.

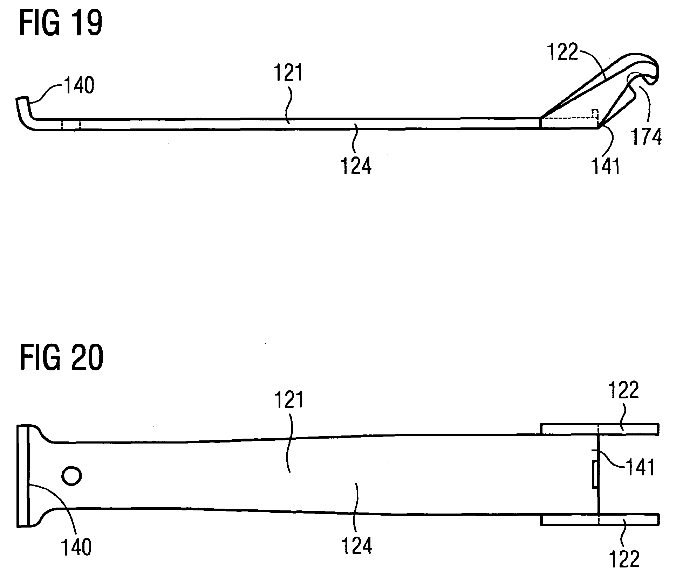

Die FIG 19 und 20 zeigen ein Werkzeug 121 gemäß einer Ausführungsform der vorliegenden Erfindung, das zum einfachen Betätigen der Bajonettverschlussköpfe 74 zur Änderung der Stellung des Eingriffsbolzens 78 der Verriegelungseinrichtung 28 vorgesehen ist. Das Werkzeug 121 ist insbesondere als Hebelwerkzeug ausgebildet und aus einem länglichen Flachstahl hergestellt. An einem Ende eines zentralen flachen Griffbereichs 124 sind an den beiden Seiten schräg nach vorne ragende Hebel 122 vorgesehen, die jeweils an ihrer Unterseite einen Einschnitt 174 zur Aufnahme jeweils eines Bajonettverschlusskopfes 74 aufweisen. Der Abstand der Hebel 122 ist also entsprechend angepasst und insbesondere größer als der Außendurchmesser des Gehäuses 34 der Verriegelungseinrichtung 28. Zwischen den Hebeln 122 verläuft senkrecht zu den Hebeln eine Eingriffskante 141, die während einer Hebelbewegung zum Bewegen der Bajonettverschlussköpfe 74 sich in der Werkzeugeingriffsnut 41 am Werkzeugangriffselement 39 des Gehäuses 34 der Verriegelungseinrichtung 28 als Widerlager abstützt.

### Bezugszeichenliste

- 10: Teigteilkammerträger
- 12, 14: Drehzapfen
- 16: Drehachse
- 18: Außenfläche
- 20a bis 20f: Teigteilkammer
- 21a bis 21f: Wandabschnitt
- 22a bis 22f: Gewindeloch
- 23a bis 23f: Wandabschnitt
- 24a bis 24f: Gewindeloch
- 26b, 26c: Drehsicherungsbolzeneinheit
- 27a bis 27f: Aufnahmelöcher
- 28, 28b, 28c: Verriegelungseinrichtung
- 29b, 29c: Drehsicherungsbolzen
- 30: Ausnehmung
- 31: Absatz
- 32: erster Messkolben
- 33: Einbuchtung
- 34, 34b, 34c: Gehäuse
- 36, 36b, 36c: Verriegelungsbolzeneinheit
- 38: Gehäusemantel
- 39: Werkzeugangriffselement
- 40: Innengewinde
- 41: Werkzeugeingriffsnut
- 42: Vorsprung
- 43: Ausnehmungen
- 44: Bajonettverschlussschlitz
- 45: Bajonettverschlussschlitz
- 46: Längsschlitzabschnitt
- 47: Einbringabschnitt
- 48: Querschlitzabschnitt
- 49: Anlagefläche
- 50: Gehäusedeckel
- 51: zentrale Öffnung
- 52: Außengewinde
- 53: Überstand
- 54: Werkzeugangrifföffnungen
- 55: Querschlitzabschnitt
- 56: unterer Gehäuseabschluss
- 57: Längsschlitzabschnitt
- 58: Basisabschnitt
- 60: Mittelabschnitt
- 62: Befestigungsabschnitt
- 63: Betätigungseinheit
- 64: Außengewinde
- 65: Werkzeugangriffsöffnungen
- 66: Durchgangsbohrung
- 68: Halteabschnitt
- 69: Zwischenabschnitt
- 70: mittlerer Abschnitt
- 71: Gewindeloch
- 72: Durchgangsloch
- 73: Innengewinde
- 74: Bajonettverschlusskopf
- 75: zentrale Verjüngung
- 76: Außengewinde
- 77: Nut
- 78: Eingriffsbolzen
- 79, 79b, 79c: Eingriffsende
- 80: Federanordnung
- 82: Tellerfedern
- 83: Werkzeugangriffsschlitz
- 85: Öffnung
- 86: Verbreiterung
- 90: vorderer Messkolbenbereich
- 92: Messkolbenstirnseite
- 93: Positionierstift
- 94: mittlerer Messkolbenbereich
- 96: Konturabschnitte
- 98: Messkolbenflansch
- 100: abgeflachter Bereich
- 102: Messkolbennut
- 104: Hülse
- 108: Hülsenflansch
- 110: Nut
- 111: Werkzeug
- 112: Hülseneinsetzteil
- 114: Hülseneinsetzöffnung
- 116: Schrägfläche 116
- 119: Bolzenaufnahmeöffnung
- 120: Durchgangsbohrungen
- 121: Werkzeug
- 122: Hebel
- 124: Griffbereich
- 140: Hebelansatz
- 141: Eingriffskante
- 174: Einschnitt

- a, b, d: Durchmesser
- e: Breite
- A, B, C,: Achse
- E, F, G: Achse
- L: Längsachse
- V: Verriegelungsrichtung

## Patentansprüche

1. Verriegelungseinrichtung (28) zum Verriegeln eines in einer Teigteilkammer (20a, b, c, d, e, f) eines Teigteilkammerträgers (10) einer Teigteilmaschine aufgenommenen Innenelements, insbesondere eines Messkolbens, Absperrkolbens (32; 158) oder einer das Teigteilkammervolumen reduzierenden Hülse (104), **gekennzeichnet durch**
1) eine Verriegelungsbolzeneinheit (36) mit einem Eingriffsbolzen (78), die zwischen einer verriegelten Stellung, in der der Eingriffsbolzen (78b) wenigstens teilweise in die Teigteilkammer ragt und in einer Aufnahme des Innenelements in Eingriff ist, einerseits und einer entriegelten Stellung, in der der Eingriffsbolzen (78b) nicht in die Teigteilkammer ragt und nicht in der Aufnahme des Innenelements in Eingriff ist, andererseits hin und her bewegbar ist,
2) wobei die Verriegelungsbolzeneinheit (36) mittels eines Bajonettverschlusses (44, 45, 74) in der verriegelten Stellung und/oder in der entriegelten Stellung fixierbar ist.

2. Verriegelungseinrichtung (28) nach Anspruch 1, wobei die Verriegelungsbolzeneinheit (36) in einem Gehäuse (34) geführt und in dem Gehäuse (34) entlang einer Längsachse (L) des Gehäuses (34) und/oder in einer Verriegelungsrichtung (V) zwischen der entriegelten Stellung und der verriegelten Stellung bewegbar und in der entgegen gesetzten Richtung zurück bewegbar ist.

3. Verriegelungseinrichtung (28) nach Anspruch 2, wobei das Gehäuse (34) einen, insbesondere hohlzylindrisch um die Längsachse (L) ausgebildeten, Gehäusemantel (38) umfasst, wobei optional die Verriegelungsbolzeneinheit (36), mit einer, insbesondere zylindrischen, Außenumfangsfläche an der, insbesondere zylindrischen, Innenwandung des Gehäusemantels (38) geführt ist.

4. Verriegelungseinrichtung (28) nach Anspruch 2 oder 3, wobei das Gehäuse (34), wenn abhängig von Anspruch 3 der Gehäusemantel (38), in seinem unteren Endbereich mit einem zur Längsachse (L) hin einwärts vorstehenden ringförmigen Vorsprung (42) versehen ist.

5. Verriegelungseinrichtung (28) nach einem der Ansprüche 1 bis 4, wobei die Verriegelungseinrichtung (28), mittels eines daran vorgesehenen, insbesondere länglichen und hohlzylindrischen, Befestigungsabschnittes (62) an einer Wandung der Teigteilkammer oder des Teigteilkammerträgers (10) befestigbar oder befestigt ist, wobei der Befestigungsabschnitt (62) insbesondere ein Außengewinde (64) aufweist, das in ein Gewindeloch (24a bis 24f) in der Wandung der Teigteilkammer oder des Teigteilkammerträgers (10) einschraubbar oder eingeschraubt ist,

6. Verriegelungseinrichtung (28) nach einem der Ansprüche 1 bis 5, wobei in Verriegelungsrichtung (V) gesehen die Verriegelungsbolzeneinheit (36) einen um ihre Längsachse (D), insbesondere hohlzylindrisch oder bolzenartig ausgebildeten, oberen Abschnitt (68), einen, insbesondere kreisscheibenförmigen, mittleren Abschnitt (70), einen bolzenförmigen Zwischenabschnitt (69) und schließlich den Eingriffsbolzen (78) aufweist, wobei optional
der Zwischenabschnitt (69) der Verriegelungsbolzeneinheit (36) über eine Ringnut (77), die als Reservoir für Schmiermittel zum Schmieren vorgesehen ist, mit dem Eingriffsbolzen (78) verbunden ist.

7. Verriegelungseinrichtung (28) nach Anspruch 2 oder nach Anspruch 2 in Kombination mit zumindest einem der Ansprüche 3 bis 6, wobei ,
1) die Verriegelungsbolzeneinheit (36) eine Längsachse (D) aufweist, die koaxial zu der Längsachse (L) des Gehäuses (34) verläuft, wenn die Verriegelungsbolzeneinheit (36) im Gehäuse (34) montiert ist, und/oder
2) ein, insbesondere ringförmig ausgebildeter, Gehäusedeckel (50) mit einer zentralen Öffnung (51) vorgesehen ist, wobei ein Teil der Verriegelungsbolzeneinheit (36), wenn abhängig von Anspruch 6 der obere Abschnitt (68), durch die Öffnung (51) im Gehäusedeckel (50) geführt ist, wobei optional
2.1) das Gehäuse (34), wenn abhängig von Anspruch 3 der Gehäusemantel (38), in seinem oberen Endbereich mit einem Innengewinde (40) versehen ist, mit dem ein Außengewinde (52) des Gehäusedeckels (50) in Eingriff gebracht ist oder werden kann, wobei insbesondere zum Eindrehen des Gehäusedeckels (50) an dessen AuBenfläche Werkzeugangrifföffnungen (54) vorgesehen sind, in die ein entsprechend ausgebildeter Werkzeugschlüssel eingreifen kann, und/oder
3) an der Unterseite des Gehäuses (34), wenn abhängig von Anspruch 4 an der Unterseite seines ringförmigen Vorsprunges (42), wenigstens zwei, vorzugsweise diametral zur Längsachse (L) angeordnete, Ausnehmungen (43) zum Einsetzen von Positionierstiften (93), die am Teigteilkammerträger befestigt sind, zum Vorpositionieren und insbesondere zur Drehmomentaufnahme beim Anschrauben der Verriegelungseinrichtungen vorgesehen sind, und/oder
4) ein unterer Gehäuseabschluss (56) in das Gehäuse (34), wenn abhängig von Anspruch 3 in den Gehäusemantel (38), einsetzbar ist, wobei optional
4.1) der untere Gehäuseabschluss (56) innen im Gehäuse (34) aufsitzt, so dass durch Befestigen des unteren Gehäuseabschlusses (56), insbesondere beim Einschrauben, das Gehäuse (34) und somit die gesamte Verriegelungseinrichtung (28) an der Wandung der Teigteilkammer oder des Teigteilkammerträgers (10) befestigt, insbesondere angezogen, wird, und/oder optional,
4.2) wenn abhängig von Anspruch 4 und 5, der untere Gehäuseabschluss (56) im Wesentlichen rotationssymmetrisch um eine zentrale Achse (F), die im montierten Zustand koaxial zur Längsachse (L) des Gehäuses (34) ist, ausgebildet ist, und insbesondere zunächst einen kreisringförmigen Basisabschnitt (58) und einen sich an den Basisabschnitt (58) anschließenden ebenfalls kreisringförmig ausgebildeten Mittelabschnitt (60), und dann den auf den Mittelabschnitt (60) folgenden, insbesondere länglichen und hohlzylindrischen, Befestigungsabschnitt (62) aufweist, wobei der Außendurchmesser des kreisringförmigen Basisabschnitts (58) geringfügig kleiner als der Innendurchmesser des Gehäusemantels (38) des Gehäuses (34), jedoch größer als der Innendurchmesser des ringförmigen Vorsprungs (42), ausgebildet ist, und wobei der Außendurchmesser des Mittelabschnitts (60) geringfügig kleiner als der Innendurchmesser des ringförmigen Vorsprungs (42) des Gehäuses (34) ausgebildet ist, wobei optional,
4.2.1) sich durch den unteren Gehäuseabschluss (56), insbesondere durch den Basisabschnitt (58), den Mittelabschnitt (60) und den Befestigungsabschnitt (62), die konzentrisch ausgebildet sind, entlang der Achse (F) ein zentraler, insbesondere zylindrischer, Durchgang (66), in dem der Eingriffsbolzen (78) der Verriegelungsbolzeneinheit (36) aufgenommen und geführt ist, erstreckt.

8. Verriegelungseinrichtung (28) nach einem der Ansprüche 1 bis 7, wobei durch die Verriegelungsbolzeneinheit (36), wenn abhängig von Anspruch 6 durch den mittleren Abschnitt (70), ein Durchgangsloch (72) verläuft, das an diametral einander gegenüberliegenden Öffnungen (85) mündet und/oder dessen zentrale Achse (B) die Längsachse (D) der Verriegelungsbolzeneinheit (36) in einem Mittelpunkt kreuzt.

9. Verriegelungseinrichtung (28) nach Anspruch 8, wobei durch die Verriegelungsbolzeneinheit (36), wenn abhängig von Anspruch 6 durch den mittleren Abschnitt (70), quer zum Durchgangsloch (72) ein Gewindeloch (71) nach innen verläuft, dessen Mittelachse (G) sich vorzugsweise ebenfalls mit der zentralen Achse (B) des Durchgangsloches (72) und der Längsachse (D) in dem Mittelpunkt trifft, und in das eine Feststellschraube zum Feststellen der Betätigungseinheit (63) einschraubbar oder eingeschraubt ist,

10. Verriegelungseinrichtung (28) nach Anspruch 2 oder nach Anspruch 2 in Kombination mit zumindest einem der Ansprüche 3 bis 9, wobei:
1) die Verriegelungsbolzeneinheit (36) über eine mit der Verriegelungsbolzeneinheit (36) verbundene Betätigungseinheit (63) von außerhalb des Gehäuses (34) betätigbar und zwischen der entriegelten Stellung und der verriegelten Stellung hin und her bewegbar ist, wobei optional,
1.1) wenn abhängig von Anspruch 8 oder 9 in dem Durchgangsloch (72) die Betätigungseinheit (63) befestigt ist, wobei das Durchgangsloch (72) hierfür bevorzugt ein durchgehendes Innengewinde (73) aufweist, in das die Betätigungseinheit (63) einschraubbar oder eingeschraubt ist, und/oder wobei,
2) der Eingriffsbolzen (78b) ein, insbesondere als Spitze oder kegelförmig ausgebildetes, Eingriffsende (79) aufweist und in der verriegelten Stellung mit dem Eingriffsende (79) in die Teilkammer und in die Aufnahme des Innenelements ragt.

11. Verriegelungseinrichtung (28) nach Anspruch 10, wobei die Betätigungseinheit (63) wenigstens einen Bajonettverschlusskopf (74), vorzugsweise zwei, insbesondere diametral gegenüber liegende, Bajonettverschlussköpfe (74), aufweist, wobei jeder Bajonettverschlusskopf (74) durch einen korrespondierenden Bajonettverschlussschlitz (44, 45), insbesondere einen von zwei einander diametral gegenüber liegenden Bajonettverschlussschlitzen (44, 45), im Gehäuse (34), wenn abhängig von Anspruch 5 im Gehäusemantel (38) des Gehäuses (34), nach außen geführt ist.

12. Verriegelungseinrichtung (28) nach Anspruch 11, wobei
1) zwei Bajonettverschlussköpfe (74) vorhanden sind und die Betätigungseinheit (63) als entlang einer Mittelachse (C) länglich ausgebildeter Stift ausgebildet ist mit den zwei Bajonettverschlussköpfen (74) an den Enden, und jeweils innen anschließend angeordneten Verbreiterungen (86) und einer zentralen Verjüngung (75) zwischen den beiden Verbreiterungen (86), wobei optional
1.1) die Bajonettverschlussköpfe (74) und, vorzugsweise auch die zentrale Verjüngung (75), jeweils einen Außendurchmesser (a) haben, der kleiner ist als der Außendurchmesser (b) der Verbreiterungen (86) und, wobei jeder Bajonettverschlussschlitz (44, 45) jeweils einen oder den sich, insbesondere axial parallel zur Längsachse (L) des Gehäuses (34) erstreckenden, Längsschlitzabschnitt (46) und einen oder den sich im Wesentlichen rechtwinklig anschließenden Querschlitzabschnitt (48) aufweist, wobei der Außendurchmesser (a) der Bajonettverschlussköpfe (74) und, vorzugsweise auch der zentrale Verjüngung (75), insbesondere kleiner ist als die Breite (e) des geraden Teils des Längsschlitzabschnittes (46) und die Breite (g) des Querschlitzabschnittes (48) des Bajonettverschlussschlitzes (44, 45) des Gehäuses (34), und/oder optional,
1.2) wenn abhängig von Anspruch 8 oder 9, die Verbreiterungen (86) jeweils gleiche Außengewinde (76) haben, die an das Innengewinde (73) des Durchgangsloches (72) der Verriegelungsbolzeneinheit (36) angepasst sind und von beiden Seiten in das Außengewinde (76), insbesondere mittels eines Schraubendrehers, der in eine Ausnehmung in den Bajonettverschlussköpfen (74) eingreift, einschraubbar sind, und/oder optional,
1.3) wenn abhängig von Anspruch 9, die zentrale Verjüngung (75) der Betätigungseinheit (63) sich im montierten Zustand im Bereich des Mittelpunktes befindet, in dem sich die Achse (B) des Durchgangsloches (72) und die Längsachse (D) der Verriegelungsbolzeneinheit kreuzen, und des Gewindeloches (71) und durch die Feststellschraube festklemmbar ist, und/oder optional
1.4) im montierten Zustand der Betätigungseinheit (63) sich die beiden Bajonettverschlussköpfe in den Bajonettverschlussschlitzen (44, 45) befinden und durch diese nach außen ragen; und/oder
2) jeder Bajonettverschlussschlitz (44, 45) jeweils einen sich, insbesondere axial parallel zur Längsachse (L) des Gehäuses (34) erstreckenden, Längsschlitzabschnitt (46) und einen sich im Wesentlichen rechtwinklig anschließenden Querschlitzabschnitt (48) und/oder wenigstens annähernd eine Winkelform oder L-Form aufweist, wobei optional
2.1) jeweils in der Mitte zwischen dem Längsschlitzabschnitt (46) und dem Querschlitzabschnitt (48) in den Bajonettverschlussschlitz (44, 45) ein Überstand (53) des Gehäuses (34), wenn abhängig von Anspruch 3 des Gehäusemantels (38), ragt, wobei optional
2.1.1) jeder Querschlitzabschnitt (48) sich ausgehend vom Längsschlitzabschnitt (46) nach unten oder in der Verriegelungsrichtung (V) gesehen, insbesondere wenigstens annähernd kreisförmig, von einer Breite (g) beim Überstand (53) auf eine größere Breite (f) aufweitet und dadurch eine, insbesondere wenigstens annähernd kreisförmige, Anlagefläche (49) an seiner unteren oder in Verriegelungsrichtung (V) liegenden Seitenwand ausbildet und/oder der Querschlitzabschnitt (48) sich bei der Anlagefläche (49) weiter nach unten in der Verriegelungsrichtung (V) erstreckt als beim Überstand (53), und/oder optional
2.2) jeder Längsschlitzabschnitt (46) in Verriegelungsrichtung (V) gesehen zunächst einen weitgehend geraden Abschnitt mit zueinander parallelen Seiten mit Breite (e) aufweist, an den sich der Querschlitzabschnitt (48) anschließt, und dann, der Verriegelungsrichtung (V) weiter folgend und/oder an seinem vom Querschlitzabschnitt (48) abgewandten unteren Ende, einen erweiterten Einbringbereich (47) aufweist, der sich insbesondere von den zueinander parallelen Seiten ausgehend in Form eines Teilkreises mit dem Durchmesser (d) erweitert, wobei der Durchmesser (d) des Einbringbereichs (47) größer ist als die Breite (e) des geraden Abschnitts des Längsschlitzabschnittes (46), wobei optional
2.2.1) der Außendurchmesser (b) der Verbreiterungen (86) kleiner ist als der Durchmesser (d) des Einbringbereiches (47) jedoch größer als der Durchmesser (f) des Querschlitzabschnittes (48) des Bajonettverschlussschlitzes (44, 45), und/oder optional 2.3) der Querschlitzabschnitt (48) eines ersten Bajonettverschlussschlitzes (44) und der Querschlitzabschnitt (55) eines zweiten Bajonettverschlussschlitzes (45) jeweils in dieselbe Drehrichtung ausgehend vom Längsschlitzabschnitt (46 bzw. 57) des jeweiligen Bajonettverschlussschlitzes (44 und 45) ragen und/oder die Bajonettverschlussschlitze (44 und 45) bei Drehung des Gehäuses (34) um 180° um die Längsachse (L) ineinander übergehen,

13. Verriegelungseinrichtung (28) nach einem der vorhergehenden Ansprüche wobei:
1) eine Federanordnung (80) vorgesehen ist zum Beaufschlagen der Verriegelungsbolzeneinheit (36) mit einer Vorspannkraft, vorzugsweise in Richtung der Verriegelungsrichtung (V) oder zur verriegelten Stellung hin, wobei optional,
1.1) wenn abhängig von Anspruch 6, die Federanordnung (80) auf dem oder um den oberen Abschnitt (68) der Verriegelungsbolzeneinheit (36) angeordnet ist und auf dem mittleren Abschnitt (70) der Verriegelungsbolzeneinheit (36) aufliegt und auf diesen mittleren Abschnitt (70) und damit die gesamte Verriegelungsbolzeneinheit (36) einschließlich des Eingriffsbolzens (78) die Vorspannkraft ausübt, und/oder optional
1.2) die Federanordnung (80) einzelne übereinander angeordnete Tellerfedern (82) umfasst, und/oder optional,
1.3) wenn abhängig von Anspruch 2 oder von Anspruch 2 in Kombination mit zumindest einem der Ansprüche 3 bis 12,das Gehäuse (34) ein Werkzeugangriffselement (39) mit einer Werkzeugeingriffsnut (41) für ein Werkzeug zum Betätigen der Betätigungseinheit (63) aufweist.

14. Teigteilkammerträger (10) für eine Teigteilmaschine mit:
1) zumindest einer Teigteilkammer (20a, b, c, d, e, f) und einem in der Teigteilkammer (20a, b, c, d, e, f) aufgenommenen Innenelement, insbesondere einem Messkolben, Absperrkolben (32; 158) oder einer das Teigteilkammervolumen reduzierenden Hülse (104), sowie mit einer Verriegelungseinrichtung (28) nach einem der vorhergehenden Ansprüche zum Verriegeln und Entriegeln des Innenelements in der Teigteilkammer, wobei optional:
1.1) die Verriegelungseinrichtung (28) insbesondere mittels einer Schraubverbindung, mit einer Wandung der Teigteilkammer oder des Teigteilkammerträgers verbunden ist und/oder,
1.2) wenn abhängig von Anspruch 5, in der Wandung der Teigteilkammer ein Gewindeloch (24a bis 24f) zum Einschrauben des Befestigungsabschnittes (62) vorgesehen ist und vorzugsweise auch zwei Aufnahmeöffnungen (27a bis 27f) vorgesehen sind für zwei Positionierstifte zum Vorpositionieren und zur Drehmomentaufnahme beim Anschrauben der Verriegelungseinrichtung, wobei die Aufnahmeöffnungen bevorzugt um 180° zueinander versetzt sind.

15. Verfahren zum Montieren einer Verriegelungseinrichtung (28 oder 28b oder 28c) gemäß der Ansprüche 1 bis 13 an einem Teigteilkammerträger (10) nach Anspruch 14, umfassend die folgenden Montageschritte:
1) in einem ersten Montageschritt wird das Gehäuse (34) der Verriegelungseinrichtung mittels der zwei Positionierstifte (93) in den Ausnehmungen (43) einerends und den Aufnahmeöffnungen (27a bis 27f) andernends an der Wandung oder dem Wandabschnitt (23a bis 23f) am Teigteilkammerträger (10) vorpositioniert,
2) in einem zweiten Montageschritt wird der untere Gehäuseverschluss (56) in den Gehäusemantel (38) eingebracht und sein Befestigungsabschnitt (62) wird mit seinem Außengewinde (64) in das Innengewinde des Gewindeloches (24a bis 24f) am Teigteilkammerträger (10) eingeschraubt, bis der Basisabschnitt (58) an dem ringförmigen Vorsprung (42) des Gehäuses (34) zur Anlage kommt und zusammen mit dem Mittelabschnitt (60) die Öffnung im ringförmigen Vorsprung (42) im Wesentlichen abdichtet, wobei die Positionierstifte (93) mit festgezogen werden und Drehmomente aufnehmen,
3) in einem dritten Montageschritt wird die Verriegelungsbolzeneinheit (36) in das Gehäuse (34) eingesetzt, wobei ihr Zwischenabschnitt (69) und der Eingriffsbolzen (78) in den Durchgang (66) des unteren Gehäuseverschlusses (56) eingeführt wird,
4) in einem vierten Montageschritt wird die Betätigungseinheit (63) an der Verriegelungsbolzeneinheit (36) montiert, indem ein erster Bajonettverschlusskopf (74) durch einen Einbringbereich (47) eines Bajonettverschlussschlitzes (44 oder 45) an einer ersten Seite des Gehäusemantels (38) hindurchgeführt wird und die beiden Verbreiterungen (86) mit ihren Außengewinden (76) solange in das Innengewinde (73) des Durchganges (72) eingeschraubt werden, bis der erste Bajonettverschlusskopf (74) an der anderen Seite des Gehäusemantels (38) durch den anderen Bajonettverschlussschlitzes (44 oder 45) wieder herausragt und der zweite Bajonettverschlusskopf (74) noch an der ersten Seite des Gehäusemantels (38) aus dem Bajonettverschlussschlitzes (44 oder 45) herausragt sowie die zentrale Verjüngung (75) im Bereich des Gewindeloches (71) liegt,
5) in einem fünften Montageschritt wird in das Gewindeloch (71) eine Feststellschraube zum Feststellen der Betätigungseinheit (63) im Bereich der Verjüngung (75) eingeschraubt, wodurch die Betätigungseinheit (63) nun fest mit der Verriegelungsbolzeneinheit (36) verbunden ist und bei Angreifen und Bewegen der Bajonettverschlussköpfe (74) in den zugehörigen Bajonettverschlussschlitzen (44 oder 45) sich die Verriegelungsbolzeneinheit (36) innerhalb des Gehäuses (34) mit bewegt und zwar bei Bewegung innerhalb des Längsschlitzabschnittes (46) axial zur Längsachse (L) in oder entgegensetzt zur Verriegelungsrichtung (V) und bei Bewegung innerhalb des Querschlitzabschnittes (48) in Umfangs- oder Drehrichtung um die Längsachse (L),
6) in einem sechsten Montageschritt wird die Federanordnung (80), insbesondere nacheinander die Tellerfedern (82), über den oberen Abschnitt (68) angeordnet und stützt sich dann auf dem mittleren Abschnitt (70) ab,
7) in einem siebten Montageschritt schließlich wird der Gehäusedeckel (50) mit seinem Außengewinde (52) in das Innengewinde (40) des Gehäusemantels (38) eingeschraubt, wobei der Gehäusedeckel (50) die Federanordnung (80) gegen den mittleren Abschnitt (70) drückt und komprimiert und dadurch die Federanordnung (80) dadurch zum Erzeugen einer Vorspannkraft (K) auf die Verriegelungsbolzeneinheit (36) in der Verriegelungsrichtung (V) vorspannt, wobei optional
7.1) im siebten Schritt zum Verriegeln des Eingriffsbolzens (78) die Bajonettverschlussköpfe (74) aus den Ruhepositionen, bei denen sie auf den Anlageflächen (49) der Querschlitzabschnitte (48) aufliegen, in den Querschlitzabschnitten (48) in Richtung zu den Längsschlitzabschnitten (46) bewegt werden und dann von der Federanordnung (80) durch die Vorspannkraft (K) nach unten in den Längsschlitzabschnitten (46) bis in den Einbringabschnitt (47) gedrückt werden und/oder optional
7.2) im siebten Schritt zum Entriegeln des Eingriffsbolzens (78) die Bajonettverschlussköpfe (74) entgegen der Vorspannkraft (K) der Federanordnung (80) in den Längsschlitzabschnitten (46) bewegt werden und dann seitlich in die Querschlitzabschnitte (48) bis zu den Ruhepositionen, bei denen sie auf den Anlageflächen (49) der Querschlitzabschnitte (48) aufliegen, bewegt werden.

## Claims

1. Locking device (28) for locking an internal element, in particular a measuring piston, a shut-off piston (32; 158), or a capacity-reducing sleeve (104) of the dough divider chamber, which internal element is received in a dough divider chamber (20a, b, c, d, e, f) of a dough divider chamber holder (10) of a dough dividing machine, **characterized by**
1) a locking-bolt unit (36) having an engagement bolt (78) which ismovable back and forth between a locked position in which the engagement bolt (78b) at least in part protrudes into the dough divider chamber and engages in a receptacle of the internal element, on the one hand, and an unlocked position in which the engagement bolt (78b) does not protrude into the dough divider chamber and does not engage in the receptacle of the internal element, on the other hand,
2) wherein the locking-bolt unit (36) is fixable in the locked position and/or in the unlocked position by means of a bayonet coupling (44, 45, 74).

2. Locking device (28) according to Claim 1, wherein the locking-bolt unit (36) is guided in a housing (34) and is movable in the housing (34) along a longitudinal axis (L) of the housing (34) and/or in a locking direction (V) between the unlocked position and the locked position and back therefrom in the opposite direction.

3. Locking device (28) according to Claim 2, wherein the housing (34) comprises a housing jacket (38) which in particular is configured so as to be hollow-cylindrical about the longitudinal axis (L), wherein the locking-bolt unit (36) is optionally guided on the in particular cylindrical internal wall of the housing jacket (38) by an in particular cylindrical external circumferential area.

4. Locking device (28) according to Claim 2 or 3, wherein the housing (34), in the case of being dependent on Claim 3 the housing jacket (38), in the lower end region thereof, is provided with an annular protrusion (42) which protrudes inwards towards the longitudinal axis (L).

5. Locking device (28) according to one of Claims 1 to 4, wherein the locking device (28) by means of an in particular elongate and hollow-cylindrical fastening portion (62) which is provided on the former is fastenable or is fastened to a wall of the dough divider chamber or of the dough divider chamber holder (10), wherein the fastening portion (62) in particular has an external thread (64) which is screw-fittable or is screw-fitted into a threaded hole (24a to 24f) in the wall of the dough divider chamber or of the dough divider chamber holder (10).

6. Locking device (28) according to one of Claims 1 to 5, wherein when viewed in the locking direction (V) the locking-bolt unit (36) has an upper portion (68) which about the longitudinal axis (D) of said locking-bolt unit (36) is configured in particular in a hollow-cylindrical or bolt-type manner, a central portion (70) which in particular is in the shape of circular disc, a bolt-shaped intermediate portion (69), and finally the engagement bolt (78), wherein optionally the intermediate portion (69) of the locking-bolt unit (36) is connected to the engagement bolt (78) by way of an annular groove (77) which is provided as a reservoir for a lubricant for lubrication.

7. Locking device (28) according to Claim 2, or according to Claim 2 in conjunction with at least one of Claims 3 to 6, wherein
1) the locking-bolt unit (36) has a longitudinal axis (D) which runs coaxially to the longitudinal axis (L) of the housing (34) when the locking-bolt unit (36) is fitted in the housing (34), and/or
2) an in particular annularly configured housing cover (50) having a central opening (51) is provided, wherein part of the locking-bolt unit (36), in the case of being dependent on Claim 6 the upper portion (68), is guided through the opening (51) in the housing cover (50), wherein optionally
2.1) the housing (34), in the case of being dependent on Claim 3 the housing jacket (38), in the upper end region thereof is provided with an internal thread (40) by way of which an external thread (52) of the housing cover (50) is engaged or may be made to engage, wherein in particular in order for the housing cover (50) to be screwed in, tool purchase openings (54) in which a correspondingly configured tool key may engage are provided on the external face of said housing cover (50), and/or
3) on the lower side of the housing (34), in the case of being dependent on Claim 4 on the lower side of the annular protrusion (42) of said housing (34), at least two clearances (43), which are preferably disposed so as to be diametric to the longitudinal axis (L), for inserting positioning pins (93) which are fastened to the dough divider chamber holder are provided for pre-positioning and in particular for absorbing torque when the locking devices are screw-fitted, and/or
4) a lower housing closure (56) is insertable into the housing (34), in the case of being dependent on Claim 3 into the housing jacket (38), wherein optionally
4.1) the lower housing closure (56) is seated inside the housing (34) such that by fastening the lower housing closure (56), in particular when screw-fitting, the housing (34) and thus the entire locking device (28) are fastened to, in particular tightened to, the wall of the dough divider chamber or of the dough divider chamber holder (10), and/or optionally
4.2) in the case of being dependent on Claim 4 or 5, the lower housing closure (56) is configured about a central axis (F), which in the fitted state is coaxial to the longitudinal axis (L) of the housing (34), so as to be essentially rotationally symmetrical, and in particular initially has a toroidal base portion (58) and a central portion (60) which adjoins the base portion (58) and is likewise configured so as to be toroidal, and then, subsequent to the central portion (60), the in particular elongate and hollow-cylindrical fastening portion (62), wherein the external diameter of the toroidal base portion (58) is configured so as to be slightly smaller than the internal diameter of the housing jacket (38) of the housing (34) but larger than the internal diameter of the annular protrusion (42), and wherein the external diameter of the central portion (60) is configured so as to be slightly smaller than the internal diameter of the annular protrusion (42) of the housing (34), wherein optionally
4.2.1) a central, in particular cylindrical, passage (66) in which the engagement bolt (78) of the locking-bolt unit (36) is received and guided extends along the axis (F) through the lower housing closure (56), in particular through the base portion (58), the central portion (60), and the fastening portion (62) which are configured so as to be concentric.

8. Locking device (28) according to one of Claims 1 to 7, wherein a through hole (72), which opens out on diametrically opposite openings (85) and/or the central axis (B) of which intersects the longitudinal axis (D) of the locking-bolt unit (36) in a centre point, runs through the locking-bolt unit (36), in the case of being dependent on Claim 6 through the central portion (70).

9. Locking device (28) according to Claim 8, wherein a threaded hole (71), of which the central axis (G) preferably likewise meets the central axis (B) of the through hole (72) and the longitudinal axis (D) in the centre point, runs inward through the locking-bolt unit (36), in the case of being dependent on Claim 6 through the central portion (70), transversely to the through hole (72), a retaining screw for retaining the actuation unit (63) being screw-fittable or being screwed into said threaded hole (71).

10. Locking device (28) according to Claim 2, or according to Claim 2 in conjunction with at least one of Claims 3 to 9, wherein:
1) the locking-bolt unit (36) is actuatable from outside the housing (34) and is movable back and forth between the unlocked position and the locked position by way of an actuation unit (63) which is connected to the locking-bolt unit (36), wherein optionally
1.1) in the case of being dependent on Claim 8 or 9, the actuation unit (63) is fastened in the through hole (72), wherein the through hole (72) to this end preferably has a continuous internal thread (73) into which the actuation unit (63) is screw-fittable or is screw-fitted, and/or wherein
2) the engagement bolt (78b) has an engagement end (79) which in particular is configured as a tip or in the shape of a cone and which in the locked position by way of the engagement end (79) protrudes into the divider chamber and into the receptacle of the internal element.

11. Locking device (28) according to Claim 10, wherein the actuation unit (63) has at least one bayonet coupling head (74), preferably two bayonet coupling heads (74) which in particular are diametrically opposite one another, wherein each bayonet coupling head (74) is guided to the outside through corresponding bayonet coupling slot (44, 45), in particular through one of two bayonet coupling slots (44, 45) which are diametrically opposite one another in the housing (34), in the case of being dependent on Claim 5, in the housing jacket (38) of the housing (34).

12. Locking device (28) according to Claim 11, wherein
1) two bayonet coupling heads (74) are provided, and the actuation unit (63) is configured as a pin elongate along a central axis (C), having the two bayonet coupling heads (74) at the ends, and having in each case widenings (86) which are disposed so as to adjoin on the inside and having a central constriction (75) between the two widenings (86), wherein optionally
1.1) the bayonet coupling heads (74) and preferably also the central constriction (75) in each case have an external diameter (a) which is smaller than the external diameter (b) of the widenings (86), and wherein each bayonet coupling slot (44, 45) has in each case one or the elongated slot portion (46) which in particular extends axially so as to be parallel with the longitudinal axis (L) of the housing (34), and has one or the transverse slot portion (48) which adjoins thereto in a substantially rectangular manner, wherein the external diameter (a) of the bayonet coupling heads (74) and preferably also of the central constriction (75) is in particular smaller than the width (e) of the linear part of the elongated slot portion (46) and the width (g) of the transverse slot portion (48) of the bayonet coupling slot (44, 45) of the housing (34), and/or optionally
1.2) in the case of being dependent on Claim 8 or 9, the widenings (86) have in each case identical external threads (76) which are adapted to the internal thread (73) of the through hole (72) of the locking-bolt unit (36) and which are screw-fittable onto the external thread (76), in particular by means of a screw driver which engages in a clearance in the bayonet coupling heads (74), and/or optionally
1.3) in the case of being dependent on Claim 9, the central constriction (75) of the actuation unit (63) in the fitted state is located in the region of the centre point in which the axis (B) of the through hole (72) and the longitudinal axis (D) of the locking-bolt unit intersect, and of the threaded hole (71), and is fixedly clampable by way of the retaining screw, and/or optionally
1.4) the two bayonet coupling heads in the fitted state of the actuation unit (63) are located in the bayonet coupling slots (44, 45) and protrude outwards through the latter; and/or
2) each bayonet coupling slot (44, 45) has in each case one elongated slot portion (46), which in particular extends axially so as to be parallel with the longitudinal axis (L) of the housing (34), and a transverse slot portion (48) which adjoins thereto in a substantially rectangular manner, and/or at least approximately has an angular shape or an L-shape, wherein optionally
2.1) an excess length (53) of the housing (34), in the case of being dependent on Claim 3 of the housing jacket (38) protrudes into the bayonet coupling slot (44, 45) in each case in the centre between the elongated slot portion (46) and the transverse slot portion (48), wherein optionally
2.1.1) each transverse slot portion (48) proceeding from the elongated slot portion (46) widens in particular in at least an approximately circular shape downward or when viewed in the locking direction (V), from a width (g) at the excess length (53) to a larger width (f) and, on account thereof, configures an in particular at least approximately circular bearing face (49) on the lower sidewall of said elongated slot portion (46) or on the sidewall thereof that lies in the locking direction (V), and/or the transverse slot portion (48) at the bearing face (49) extends in the locking direction (V) further down than at the excess length (53), and/or optionally
2.2) each elongated slot portion (46) when viewed in locking direction (V) initially has a largely linear portion having two mutually parallel sides and having a width (e), the transverse slot portion (48) adjoining thereto, and then continuing in the locking direction (V) and/or on the lower end of said elongated slot portion (46) that faces away from the transverse slot portion (48) has an extended incorporation region (47) which in particular, proceeding from the two mutually parallel sides, widens in the form of a divided circle having the diameter (d), wherein the diameter (d) of the incorporation region (47) is larger than the width (e) of the linear portion of the elongated slot portion (46), wherein optionally
2.2.1) the external diameter (b) of the widenings (86) is smaller than the diameter (d) of the incorporation region (47), but is larger than the diameter (f) of the transverse slot portion (48) of the bayonet coupling slot (44, 45), and/or optionally
2.3) the transverse slot portion (48) of a first bayonet coupling slot (44) and the transverse slot portion (55) of a second bayonet coupling slot (45), proceeding from the elongated slot portion (46, 57, respectively) of the respective bayonet coupling slot (44 and 45), in each case protrude in the same rotation direction, and/or the bayonet coupling slots (44 and 45) converge upon rotation of the housing (34) by 180° about the longitudinal axis (L).

13. Locking device (28) according to one of the preceding claims, wherein:
1) a spring assembly (80) for impinging the locking-bolt unit (36) with a pre-tensioning force, preferably in the direction of the locking direction (V) or towards the locked position, is provided, wherein optionally
1.1) in the case of being dependent on Claim 6, the spring assembly (80) is disposed on or around the upper portion (68) of the locking-bolt unit (36), and bears on the central portion (70) of the locking-bolt unit (36), and exerts the pre-tensioning force on this central portion (70) and thus on the entire locking-bolt unit (36) including the engagement bolt (78), and/or optionally
1.2) the spring assembly (80) comprises individual disc springs (82) which are disposed on top of one another, and/or optionally
1.3) in the case of being dependent on Claim 2 or on Claim 2 in combination with at least one of Claims 3 to 12, the housing (34) has a tool purchase element (39) having a tool engagement groove (41) for a tool for actuating the actuation unit (63).

14. Dough divider chamber holder (10) for a dough divider machine having:
1) at least one dough divider chamber (20a, b, c, d, e, f) and an internal element, in particular a measuring piston, a shut-off piston (32; 158) or a capacity-reducing sleeve (104) of the dough divider chamber, which internal element is received in the dough divider chamber (20a, b, c, d, e, f) and having a locking device (28) according to one of the preceding claims, for locking and unlocking the internal element in the dough divider chamber; wherein optionally:
1.1) the locking device (28) is connected to a wall of the dough divider chamber or of the dough divider chamber holder in particular by means of a screw connection, and/or
1.2) in the case of being dependent on Claim 5, a threaded hole (24a to 24f) for screw-fitting the fastening portion (62) is provided in the wall of the dough divider chamber, and preferably also two receptacle openings (27a to 27f) are provided for two positioning pins for pre-positioning and for absorbing torque when screw-fitting the locking device, wherein the receptacle openings are preferably mutually offset by 180°.

15. Method for fitting a locking device (28 or 28b or 28c) according to Claims 1 to 13 to a dough divider chamber holder (10) according to Claim 14, the method comprising the following fitting steps:
1) in a first fitting step the housing (34) of the locking device by means of the two positioning pins (93) in the clearances (43), on the one hand, and by means of the receptacle openings (27a to 27f), on the other hand, is pre-positioned on the wall or on the wall portion (23a to 23f) on the dough divider chamber holder (10),
2) in a second fitting step the lower housing closure (56) is incorporated in the housing jacket (38), and the fastening portion (62) of the former by way of the external thread (64) thereof is screw-fitted into the internal thread of the threaded hole (24a to 24f) on the dough divider chamber holder (10) until the base portion (58) comes to bear on the annular protrusion (42) of the housing (34) and together with the central portion (60) substantially seals the opening in the annular protrusion (42), wherein the positioning pins (93) are conjointly tightened and absorb torque,
3) in a third fitting step the locking-bolt unit (36) is inserted into the housing (34), wherein the intermediate portion (69) of the former and the engagement bolt (78) are introduced into the passage (66) of the lower housing closure (56),
4) in a fourth fitting step the actuation unit (63) is fitted to the locking-bolt unit (36) by guiding a first bayonet coupling head (74) through an incorporation region (47) of a bayonet coupling slot (44 or 45) on a first side of the housing jacket (38), and by screw-fitting the two widenings (86) by way of the external threads (76) thereof into the internal thread (73) of the passage (72) until the first bayonet coupling head (74) protrudes again on the other side of the housing jacket (38) through the other bayonet coupling slot (44 or 45) and the second bayonet coupling head (74) still protrudes from the bayonet coupling slot (44 or 45) on the first side of the housing jacket (38) and the central constriction (75) lies in the region of the threaded hole (71),
5) in a fifth fitting step a retaining screw for retaining the actuation unit (63) is screw-fitted into the threaded hole (71) in the region of the constriction (75), on account of which the actuation unit (63) is now fixedly connected to the locking-bolt unit (36) and upon purchase of the bayonet coupling heads (74) and moving the latter in the associated bayonet coupling slots (44 and 45) the locking-bolt unit (36) is conjointly moved within the housing (34), specifically axially to the longitudinal axis (L) or counter to the locking direction (V) in the case of movement within the elongated slot portion (46), and in the circumferential direction or the rotation direction about the longitudinal axis (L) in the case of movement within the transverse slot portion (48),
6) in a sixth fitting step the spring assembly (80), in particular successively the disc springs (82), is/are disposed on the upper portion (68) and is/are then supported on the central portion (70),
7) in a seventh step the housing cover (50) by way of the external thread (52) thereof is finally screw-fitted into the internal thread (40) of the housing jacket (38), wherein the housing cover (50) presses the spring assembly (80) against the central portion (70), compressing said spring assembly (80), and on account thereof pretensions the spring assembly (80) in order to generate a pre-tensioning force (K) acting in the locking direction (V) on the locking-bolt unit (36), wherein optionally
7.1) in the seventh step, in order to lock the engagement bolt (78), the bayonet coupling heads (74) are moved in the transverse slot portions (48) from the rest positions in which the latter bear on the bearing faces (49) of the transverse slot portion (48) in the direction towards the elongated slot portions (46) and are then pressed downwards by the spring assembly (80) on account of the pre-tensioning force (K) into the elongated slot portions (46) down into the incorporation region (47), and/or optionally
7.2) in the seventh step, in order to unlock the engagement bolt (78), the bayonet coupling heads (74) are moved in the elongated slot portions (46) counter to the pre-tensioning force (K) of the spring assembly (80) and are then moved laterally into the transverse slot portions (48) up to the rest positions in which said bayonet coupling heads (74) bear on the bearing faces (49) of the transverse slot portions (48).

## Revendications

1. Dispositif de verrouillage (28) pour le verrouillage d'un élément interne logé dans une chambre de division de pâte (20a, b, c, d, e, f) d'un support de chambre de division de pâte (10) d'une diviseuse de pâte, plus particulièrement d'un piston de mesure, d'un piston d'arrêt (32; 158) ou d'un manchon (104) réduisant le volume de la chambre de division de pâte, **caractérisé par**
1) une unité à tige de verrouillage (36) avec une tige d'emboîtement (78) qui est mobile, avec un mouvement de va-et-vient, d'une part, entre une position verrouillée, dans laquelle la tige d'emboîtement (78b) dépasse au moins partiellement dans la chambre de division de pâte et est emboîtée dans un logement de l'élément interne, et d'autre part, dans une position déverrouillée, dans laquelle la tige d'emboîtement (78b) ne dépasse pas dans la chambre de division de pâte et n'est pas emboîtée dans le logement de l'élément interne,
2) l'unité à tige d'emboîtement (36) pouvant être fixée, au moyen d'une fermeture à baïonnette (44, 45, 74) dans la position verrouillée et/ou dans la position déverrouillée.

2. Dispositif de verrouillage (28) selon la revendication 1, l'unité à tige de verrouillage (36) étant guidée dans un boîtier (34) et mobile dans le boîtier (34), le long d'un axe longitudinal (L) du boîtier (34) et/ou dans une direction de verrouillage (V) entre la position déverrouillée et la position verrouillée et dans la direction opposée.

3. Dispositif de verrouillage (28) selon la revendication 2, le boîtier (34) comprenant une enveloppe de boîtier (38), conçue plus particulièrement sous une forme cylindrique creuse autour de l'axe longitudinal (L), l'unité à tige de verrouillage (36) étant, en option, guidée, avec une surface périphérique externe, plus particulièrement cylindrique, sur la paroi interne de l'enveloppe du boîtier (38).

4. Dispositif de verrouillage (28) selon la revendication 2 ou 3, le boîtier (34), selon la revendication 3, l'enveloppe de boîtier (38), est munie, au niveau de sa partie d'extrémité inférieure, avec une saillie (42) annulaire dépassant vers l'intérieur en direction de l'axe longitudinal (L).

5. Dispositif de verrouillage (28) selon l'une des revendications 1 à 4, le dispositif de verrouillage (28) pouvant être fixé ou étant fixé, au moyen d'une portion de fixation (62), disposée dessus, plus particulièrement de forme oblongue et cylindrique creuse, à une paroi de la chambre de division de pâte ou du support de chambre de division de pâte (10), la portion de fixation (62) comprenant plus particulièrement un filetage externe (64), qui peut être vissé ou qui peut être vissé dans un trou taraudé (24a à 24f) dans la paroi de la chambre de division de pâte ou du support de chambre de division de pâte (10).

6. Dispositif de verrouillage (28) selon l'une des revendications 1 à 5, l'unité à tige de verrouillage (36) comprenant, vues dans la direction de verrouillage (V), une portion supérieure (68) conçue plus particulièrement de manière cylindrique creuse ou sous la forme d'une tige autour de son axe longitudinal (D), une portion centrale (70), plus particulièrement de la forme d'un disque, une portion intermédiaire (69) en forme de tige et enfin la tige d'emboîtement (78),
la portion intermédiaire (69) de l'unité à tige de verrouillage (36) étant reliée avec la tige d'emboîtement (78) par l'intermédiaire d'une rainure annulaire (77), qui est conçue comme un réservoir de lubrifiant.

7. Dispositif de verrouillage (28) selon la revendication 2 ou selon la revendication 2 en combinaison avec au moins une des revendications 3 à 6,
1) l'unité à tige de verrouillage (36) comprenant un axe longitudinal (D) qui s'étendant coaxialement par rapport à l'axe longitudinal (L) du boîtier (34) lorsque l'unité à tige de verrouillage (36) est montée dans le boîtier (34) et/ou
2) un couvercle de boîtier (50), plus particulièrement de forme annulaire, avec une ouverture centrale (51), une partie de l'unité à tige de verrouillage (36), selon la revendication 6, la portion supérieure (68), étant guidée à travers l'ouverture (51) dans le couvercle de boîtier (50),
2.1) en option, le boîtier (34), selon la revendication 3, l'enveloppe du boîtier (38), étant muni, au niveau de sa zone d'extrémité supérieure, d'un filetage interne (40), avec lequel un filetage externe (52) du couvercle de boîtier (50) est vissé ou peut être vissé, plus particulièrement, pour le vissage du couvercle de boîtier (50) sur sa surface externe, des ouvertures de prise d'outil (54) sont prévues, dans lesquelles une clé d'outil correspondante peut s'emboîter et/ou
3) sur le côté inférieur du boîtier (34), selon la revendication 4, sur le côté inférieur de sa saillie annulaire (42), sont fixées au moins deux évidements (43), disposés de préférence de manière diamétral par rapport à l'axe longitudinal (L), pour l'insertion de goujons de positionnement (93), qui sont fixés sur le support de chambre de division de pâte, pour le pré-positionnement et plus particulièrement pour l'absorption du couple lors du vissage du dispositif de verrouillage, sont prévus et/ou
4) une fermeture inférieure de boîtier (56) peut être insérée dans le boîtier (34), selon la revendication 3, dans l'enveloppe du boîtier (38),
4.1) en option, la fermeture de boîtier (56) reposant à l'intérieur dans le boîtier (34), de façon à ce que la fixation de la fermeture inférieure du boîtier (56), plus particulièrement son vissage, permet de fixer, plus particulièrement de serrer le boîtier (34) et donc l'ensemble du dispositif de verrouillage (28) sur la paroi de la chambre de division de pâte ou du support de chambre de division de pâte (10) et/ou
4.2) en option, selon la revendication 4 et 5, la fermeture inférieure du boîtier (56) étant conçue de manière globalement symétrique en rotation autour d'un axe central (F), qui est, dans l'état monté, coaxial par rapport à l'axe longitudinal (L) du boîtier (34) et, plus particulièrement, comprenant d'abord une portion de base circulaire (58) et une portion centrale (60), également circulaire et adjacente à la portion de base (58), puis la portion de fixation (62), succédant à la portion centrale (60), plus particulièrement de forme oblongue et cylindrique creuse, le diamètre externe de la portion de base (58) circulaire étant un peu inférieur au diamètre interne de l'enveloppe (38) du boîtier (34), mais supérieure au diamètre interne de la saillie annulaire (42), et le diamètre externe de la portion centrale (60) étant un peu inférieur au diamètre interne de la saillie annulaire (42) du boîtier (34),
4.2.1) en option, un passage (66) central, plus particulièrement cylindrique, dans lequel la tige d'emboîtement (78) de l'unité à tige de verrouillage (36) est logée et guidée, s'étendant, le long de l'axe (F), à travers la fermeture inférieure du boîtier (56), plus particulièrement à travers la portion de base (58), la portion centrale (60) et la portion de fixation (62), qui sont conçues de manière concentrique.

8. Dispositif de verrouillage (28) selon l'une des revendications 1 à 7, moyennant quoi, à travers l'unité à tige de verrouillage (36), selon la revendication 6, à travers la portion centrale (70), s'étend un trou de passage (72) qui débouche au niveau d'ouvertures (85) diamétralement opposées entre elles et/ou dont l'axe centrale (B) croise l'axe longitudinal (D) de l'unité à tige de verrouillage (36) au niveau d'un point central.

9. Dispositif de verrouillage (28) selon la revendication 8, moyennant quoi, à travers l'unité à tige de verrouillage (36), selon la revendication 6, à travers la portion centrale (70), s'étend, vers l'intérieur, un trou taraudé (71), transversalement par rapport au trou de passage (72), dont l'axe central (G) rencontre de préférence également l'axe central (B) du trou de passage (72) et l'axe longitudinal (D) au niveau du centre et dans lequel une vis de blocage peut être vissée ou est vissée pour le blocage de l'unité d'actionnement (63).

10. Dispositif de verrouillage (28) selon la revendication 2 ou selon la revendication 2 en combinaison avec au moins une des revendications 3 à 9,
1) l'unité à tige de verrouillage (36) étant actionnable de l'extérieur du boîtier (34) par l'intermédiaire d'une unité d'actionnement (63) reliée à l'unité à tige de verrouillage (36) et peut être déplacée, avec un mouvement de va-et-vient, entre la position déverrouillée et la position verrouillée,
1.1) en option, selon la revendication 8 ou 9, dans le trou de passage (72), l'unité d'actionnement étant fixée, le trou de passage (72) comprenant pour cela, de préférence, un filetage interne (73) traversant dans lequel l'unité d'actionnement (63) peut être vissée ou est vissée et/ou
2) la tige d'emboîtement (78b) comprenant une extrémité d'emboîtement (79), conçue plus particulièrement sous la forme d'une pointe ou d'un cône et qui dépasse, dans la position verrouillée, avec l'extrémité d'emboîtement (79), dans la chambre de division de pâte et dans le logement de l'élément interne.

11. Dispositif de verrouillage (28) selon la revendication 10, l'unité d'actionnement (63) comprenant au moins une tête de fermeture à baïonnette (74), de préférence deux têtes de fermeture à baïonnette (74), plus particulièrement diamétralement opposées, chaque tête de fermeture à baïonnette (74) étant guidé vers l'extérieur à travers une fente de fermeture à baïonnette (44, 45) correspondante, plus particulièrement à travers une parmi deux fentes de fermeture à baïonnette (44, 45) diamétralement opposées, dans le boîtier (34), selon la revendication 5, dans l'enveloppe (38) du boîtier (34).

12. Dispositif de verrouillage (28) selon la revendication 11
1) deux têtes de fermeture à baïonnette (74) étant prévues et l'unité d'actionnement (63) étant conçue comme un goujon oblong le long d'un axe central (C) avec les deux têtes de fermeture à baïonnette (74) aux extrémités, et des élargissements (86) disposés ensuite à l'intérieur et un rétrécissement central (75) entre les deux élargissements (86),
1.1) en option, les têtes de fermeture à baïonnette (74) et, de préférence également le rétrécissement central (75), présentant un diamètre externe (a) qui est inférieur au diamètre externe (b) des élargissements (86) et chaque fente de fermeture à baïonnette (44, 45) comprenant chacune une ou la portion de fente longitudinale (46) s'étendant, plus particulièrement, de manière axiale et parallèle à l'axe longitudinal (L) du boîtier (34) et une ou la portion de fente transversale (48) suivante, globalement perpendiculaire, le diamètre externe (a) des têtes de fermeture à baïonnette (74) et, de préférence, également le rétrécissement central (75), étant plus particulièrement inférieur à la largeur (e) de la partie droite de la portion de fente longitudinale de la portion de fente longitudinale (46) et à la largeur (g) de la portion de fente transversale (48) de la fente de fermeture à baïonnette (44, 45) du boîtier (34) et/ou
1.2) en option, selon la revendication 8 ou 9, les élargissements (86) présentant les mêmes filetages externes (76), qui sont adaptés au filetage interne (73) du trou de passage (72) de l'unité à tige de verrouillage (36) et pouvant être vissés des deux côtés dans le filetage externe (76), plus particulièrement au moyen d'un tournevis, qui s'emboîte dans un évidement dans les têtes de fermeture à baïonnette (74) et/ou
1.3) en option, selon la revendication 9, le rétrécissement central (75) de l'unité d'actionnement (63) se trouve, dans l'état monté, au niveau du centre, dans lequel l'axe (B) du trou de passage (72) et l'axe longitudinal (D) de l'unité à tige de verrouillage se croisent, et du trou taraudé (71) et peut être bloqué par la vis de blocage et/ou 1.4) en option, dans l'état monté de l'unité d'actionnement (63), les deux têtes de fermeture à baïonnette se trouvent dans les fentes de fermeture à baïonnette (44, 45) et dépassent vers l'extérieur à travers celles-ci; et/ou
2) chaque fente de fermeture à baïonnette (44, 45) comprenant une portion de fente longitudinale (46) s'étendant plus particulièrement de manière axiale et parallèle à l'axe longitudinal (L) du boîtier (34) et une portion de fente transversale (48) suivante globalement perpendiculaire et/ou présentant au moins approximativement une forme angulaire ou une forme de L,
2.1) en option, au centre entre la portion de fente longitudinale (46) et la portion de fente transversale (48), une saillie (53) du boîtier (34), selon la revendication 3, de l'enveloppe du boîtier (38), dépassant dans la fente de fermeture à baïonnette (44, 45),
2.1.1) en option, chaque portion de fente transversale (48) s'élargissant, à partir de la portion de fente longitudinale (46) vers le bas ou, vu dans la direction de verrouillage (V), plus particulièrement de manière au moins approximativement circulaire, d'une largeur (g), au niveau de la saillie (53), vers une largeur (f) supérieure et une surface d'appui (49), plus particulièrement au moins approximativement circulaire, étant ainsi réalisée au niveau de sa paroi latérale se trouvant en bas ou dans la direction de verrouillage (V) et/ou la portion de fente transversale (48) s'étendant, au niveau de la surface d'appui (49), plus loin vers le bas dans la direction de verrouillage (V) qu'au niveau de la saillie (53) et/ou
2.2) en option, chaque portion de fente longitudinale (46) présentant d'abord, vue dans la direction de verrouillage (V), une portion largement droite avec des côtés parallèles entre eux d'une largeur (e), à laquelle se raccorde la portion de fente transversale (48), puis, en continuant dans la direction de verrouillage (V) et/ou comprenant, au niveau de son extrémité inférieure opposée à la portion de fente transversale (48), une zone d'insertion (47) élargie qui s'élargit, plus particulièrement à partir des côtés parallèles entre eux, sous la forme d'une portion de cercle avec le diamètre (d), le diamètre (d) de la zone d'insertion (47) étant supérieur à la largeur (e) de la portion droite de la portion de fente longitudinale (46),
2.2.1) en option, le diamètre externe (b) des élargissements (86) étant inférieur au diamètre (d) de la zone d'insertion (47), mais supérieur au diamètre (f) de la portion de fente transversale (48) de la fente de fermeture à baïonnette (44, 45) et/ou
2.3) en option, la portion de fente transversale (48) d'une première fente de fermeture à baïonnette (44) et la portion de fente transversale (55) d'une deuxième fente de fermeture à baïonnette (45) dépassant chacune dans la même direction de rotation, à partir de la portion de fente longitudinale (46 ou 57) de la fente de fermeture à baïonnette (44 et 45) correspondante et/ou les fentes de fermeture à baïonnette (44 et 45) coïncidant l'une avec l'autre lors d'une rotation du boîtier (34) de 180° autour de l'axe longitudinal (L).

13. Dispositif de verrouillage (28) selon l'une des revendications précédentes,
1) un dispositif à ressort (80) étant prévu pour l'actionnement de l'unité à tige de verrouillage (36) avec une force de pré-contrainte, de préférence dans la direction de verrouillage (V) ou vers la position verrouillée,
1.1) en option, selon la revendication 6, le dispositif à ressort (80) étant disposé sur ou autour de la portion supérieure (68) de l'unité à tige de verrouillage (36) et reposant sur la portion centrale (70) de l'unité à tige de verrouillage (36) et exerce, sur cette portion centrale (70) et donc sur l'ensemble de l'unité à tige de verrouillage (36), y compris la tige d'emboîtement (78), la force de pré-contrainte et/ou
1.2) en option, le dispositif à ressort (80) comprend différentes rondelles ressorts (82) disposées les unes sur les autres et/ou
1.3) en option, selon la revendication 2 ou la revendication 2 en combinaison avec au moins une des revendications 3 à 12, le boîtier (34) comprenant un élément de prise d'outil (39) avec une rainure de prise d'outil (41) pour un outil pour l'actionnement de l'unité d'actionnement (63).

14. Support de chambre de division de pâte (10) pour une diviseuse de pâte avec :
1) au moins une chambre de division de pâte (20a, b, c, d, e, f) et un élément interne logé dans la chambre de division de pâte (20a, b, c, d, e, f), plus particulièrement un piston de mesure, un piston d'arrêt (32; 158) ou un manchon (104) réduisant le volume de la chambre de division de pâte ainsi qu'avec un dispositif de verrouillage (28) selon l'une des revendications précédentes pour le verrouillage et le déverrouillage de l'élément interne dans la chambre de division de pâte,
1.1) en option, le dispositif de verrouillage (28) étant relié, plus particulièrement au moyen d'une liaison vissée, avec une paroi de la chambre de division de pâte ou du support de chambre de division de pâte et/ou
1.2) selon la revendication 5, dans la paroi de la chambre de division de pâte, un trou taraudé (24a à 24f) étant prévu pour le vissage de la portion de fixation (62) et de préférence également deux ouvertures de logement (27a à 27f) étant prévues pour deux goujons de positionnement pour le pré-positionnement et pour l'absorption du couple lors du vissage du dispositif de verrouillage, les ouvertures de logement étant, de préférence, décalées entre elles de 180°.

15. Procédé de montage d'un dispositif de verrouillage (28 ou 28b ou 28c) selon les revendications 1 à 13 sur un support de chambre de division de pâte (10) selon la revendication 4, comprenant les étapes de montage suivantes :
1) dans une première étape de montage, le boîtier (34) du dispositif de verrouillage est pré-positionné au moyen des deux goujons de positionnement (93), à une extrémité, dans les évidements (43) et, à l'autre extrémité, au niveau des ouvertures de logement (27a à 27f), sur la paroi ou la portion de paroi (23a à 23f) sur le support de chambre de division de pâte (10),
2) dans une deuxième étape de montage, la fermeture inférieure du boîtier (56) est insérée dans l'enveloppe du boîtier (38) et sa portion de fixation (62) est vissée, avec son filetage externe (64), dans le filetage interne du trou taraudé (24a à 24f), au support de chambre de division de pâte (10), jusqu'à ce que la portion de base (58) s'appuie contre la saillie annulaire (42) du boîtier (34) et étanchéifie globalement, en même temps que la portion centrale (60), l'ouverture dans la saillie annulaire (42), les goujons de positionnement (93) étant également serrés et absorbant les couples,
3) dans une troisième étape de montage, l'unité à tige de verrouillage (36) est insérée dans le boîtier (34), sa portion intermédiaire (69) et la tige d'emboîtement (78) étant introduites dans le passage (66) de la fermeture inférieure du boîtier (56),
4) dans une quatrième étape de montage, l'unité d'actionnement (63) est montée sur l'unité à tige de verrouillage (36) en introduisant une première tête de fermeture à baïonnette (74) à travers une zone d'introduction (47) d'une fente de fermeture à baïonnette (44 ou 45) sur un premier côté de l'enveloppe du boîtier (38) et les deux élargissements (86) sont vissés, avec leurs filetages externes (76), dans le filetage interne (73) du passage (72) jusqu'à ce que la première tête de fermeture à baïonnette (74) dépasse à nouveau de l'autre côté de l'enveloppe du boîtier (38) à travers l'autre fente de fermeture à baïonnette (44 ou 45) et jusqu'à ce que la deuxième tête de fermeture à baïonnette (74) dépasse encore du premier côté de l'enveloppe du boîtier (38) hors de la fente de fermeture à baïonnette (44 ou 45) et le rétrécissement (75) se trouve au niveau du trou taraudé (71),
5) dans une cinquième étape de montage, dans le trou taraudé (71), est vissée une vis de blocage pour le blocage de l'unité d'actionnement (63) au niveau du rétrécissement (75), l'unité d'actionnement (63) étant alors relié de manière fixe avec l'unité à tige de verrouillage (36) et, lors de la prise et du déplacement des têtes de fermeture à baïonnette (74) dans les fentes de fermeture à baïonnette (44 ou 45) correspondante, l'unité à tige de verrouillage (36) se déplace en même temps à l'intérieur du boîtier (34), à savoir lors du mouvement à l'intérieur de la portion de fente longitudinale (46) axialement par rapport à l'axe longitudinal (L) ou dans la direction opposée à la direction de verrouillage (V) et lors du mouvement à l'intérieur de la portion de fente transversale (48) dans la direction périphérique ou de rotation autour de l'axe longitudinal (L),
6) dans une sixième étape de montage, le dispositif à ressort (80), plus particulièrement les rondelles ressorts (82) disposées les unes derrière les autres, est disposé au-dessus de la portion supérieure (68) et s'appuie alors sur la portion centrale (70),
7) dans une septième étape de montage, le couvercle du boîtier (50) est vissé, avec son filetage externe (52), dans le filetage interne (40) de l'enveloppe de boîtier (38), le couvercle du boîtier (50) comprimant le dispositif à ressort (80) contre la portion centrale (70) et le dispositif à ressort (80), pré-contraignant ainsi le dispositif à ressort (80) pour la génération d'une force de pré-contrainte (K) sur l'unité à tige de verrouillage (36) dans la direction de verrouillage (v),
7.1) en option, dans la septième étape, pour le verrouillage de la tige d'emboîtement (78), les têtes de fermeture à baïonnette (74) sont déplacées des positions de repos, dans lesquelles elles s'appuient contre les surfaces d'appui (49) des portions de fentes transversales (48), dans les portions de fentes transversales (48) en direction des portions de fentes longitudinales (46) puis sont comprimées par le dispositif à ressort (80) grâce à la force de pré-contrainte (K) vers le bas dans les portions de fentes longitudinales (46) jusque dans la portion d'insertion (47) et/ou
7.2) en option, dans la septième étape, pour le déverrouillage de la tige d'emboîtement (78), les têtes de fermeture à baïonnette (74) sont déplacées contre la force de pré-contrainte (K) du dispositif à ressort (80) dans les portions de fentes longitudinales (46) puis sont déplacées latéralement dans les portions de fentes transversales (48) jusqu'aux positions de repos dans lesquelles elles s'appuient contre les surfaces d'appui (49) des portions de fentes transversales (48).
